# EUROPÄISCHE PATENTSCHRIFT

(11) **EP 3 988 361 B1**
(45) Veröffentlichungstag und Bekanntmachung des Hinweises auf die Patenterteilung: **29.04.2026**
(21) Anmeldenummer: 21203287.4
(22) Anmeldetag: 18.10.2021
(51) Int. Cl.: B60K 6/20, B60W 10/06, B60W 10/08, B60W 10/26, B60W 20/11, B60W 20/12, B60W 20/13, B60W 20/16, B60W 10/10, B60W 40/02, B60W 40/09, B60W 50/00, G01C 21/34, B60W 40/00, G01C 21/36

(54) **VERFAHREN ZUM BETREIBEN EINES FAHRZEUGS MIT EINEM HYBRIDANTRIEBSSTRANGSYSTEM**
METHOD FOR OPERATING A VEHICLE WITH A HYBRID DRIVE TRAIN SYSTEM
PROCÉDÉ DE FONCTIONNEMENT D'UN VÉHICULE DOTÉ D'UN SYSTÈME DE TRANSMISSION HYBRIDE

(30) Priorität: 19.10.2020 DE 102020127512
(43) Veröffentlichungstag der Anmeldung: 27.04.2022
(73) Patentinhaber: Technische Universität Darmstadt, 64289 Darmstadt (DE)
(72) Erfinder: Vadamalu, Raja Sangili, 64287 Darmstadt (DE); Beidl, Christian, 64285 Darmstadt (DE); Pavithiran, Sakthivel, 68642 Bürstadt (DE)
(74) Vertreter: Habermann Intellectual Property Partnerschaft von Patentanwälten mbB

(56) Entgegenhaltungen:
- EP-A1- 2 692 604
- WO-A1-2021/239402
- DE-A1- 102020 104 693
- US-A1- 2008 319 596

## Beschreibung

Die Erfindung betrifft ein Verfahren zum Betreiben eines Fahrzeugs mit einem Hybridantriebsstrangsystem, wobei das Hybridantriebsstrangsystem einen nicht elektrisch betriebenen Antriebsmotor und eine elektrisch betriebene Drehmomentmaschine aufweist, die energieübertragend mit einer Energiespeichereinrichtung verbunden ist, und wobei der Antriebsmotor und die Drehmomentmaschine von einer Steuereinrichtung gesteuert und über ein Hybridgetriebe mit einem Abtriebselement verbunden sind, wobei das Verfahren umfasst, dass eine angestrebte Ladezustandstrajektorie für einen zeitlichen Verlauf des Ladezustands der Energiespeichereinrichtung ermittelt wird, und dass der Betrieb des Hybridantriebsstrangsystems bei Berücksichtigung einer abgeschätzten erwarteten Fahrzeugantriebsleistung unter Verwendung eines Optimierungsverfahrens im Hinblick auf die angestrebte Ladezustandstrajektorie optimiert und von der Steuereinrichtung gesteuert wird.

Der Antriebsstrang eines Fahrzeuges kann alle Komponenten umfassen, die im Fahrzeug die Leistung für den Antrieb generieren und bis auf den Fahrweg des Fahrzeugs übertragen.

Ein Antriebsstrang kann beispielsweise eine starre Antriebswelle oder aber flexible Antriebsriemen zur Übertragung eines das Fahrzeug antreibenden Drehmoments aufweisen. Fahrzeuge können mit verschiedenen drehmomenterzeugenden Einrichtungen betrieben werden, mit welchen aus einer in dem Fahrzeug gespeicherten Energieform ein Drehmoment für eine das Fahrzeug antreibende Antriebsleistung erzeugt werden kann. Dabei wird regelmäßig versucht, dass die betreffende drehmomenterzeugende Einrichtung möglichst effizient betrieben wird, um ausgehend von der in dem Fahrzeug gespeicherten Energie das Fahrzeug möglichst lange bzw. möglichst weit antreiben zu können.

Bei Fahrzeugen mit einem Hybridantriebsstrangsystem weist das Fahrzeug zwei unterschiedliche drehmomenterzeugende Einrichtungen auf, die mit zwei unterschiedlichen Energieformen betrieben werden können. Während des Betriebs des Fahrzeugs kann durch eine in geeigneter Weise eingerichtete Steuerung die für eine aktuelle Fahrsituation oder im Hinblick auf ein vorgegebenes Zielkriterium jeweils günstige Energieform bzw. eine vorteilhaft einsetzbare drehmomenterzeugende Einrichtung verwendet werden. Dabei ist es in vielen verschiedenen Betriebssituationen vorteilhaft, wenn die jeweiligen Anteile der beiden drehmomenterzeugenden Einrichtungen an die jeweiligen Fahrsituationen, an individuelle Fahrcharakteristiken oder an weitere Zielkriterien kontinuierlich angepasst werden. Dabei kann zeitweise auch eine der beiden drehmomenterzeugenden Einrichtungen abgeschaltet sein und die für die gewünschte Fahrsituation erforderliche Antriebsleistung ausschließlich von der nicht abgeschalteten drehmomenterzeugenden Einrichtung erzeugt und zur Verfügung gestellt werden. Regelmäßig wird auch bei Hybridantriebsstrangsystemen eine möglichst effiziente Nutzung der insgesamt zur Verfügung stehenden Energie im Vordergrund stehen und eine wichtige Zielgröße für die Steuerung eines optimierten Betriebs des Hybridantriebsstrangsystems sein. Zudem wird oftmals auch versucht, weitere Parameter wie beispielsweise eine Reduktion einer unerwünschte Schadstoffemission, eine Erhöhung einer ausschließlich elektrisch betriebenen Reichweite oder eine Verbesserung oder möglichst lange Erhaltung des Gesundheitszustands der Energiespeichereinrichtung zu optimieren.

Bei vielen Fahrzeugen mit einem Hybridantriebsstrangsystem weist das Hybridantriebsstrangsystem einen Verbrennungsmotor als nicht elektrisch betriebenen Antriebsmotor und mindestens eine elektrisch betriebene Drehmomentmaschine auf. Der Verbrennungsmotor kann üblicherweise mit einem flüssigen Kraftstoff wie beispielsweise Benzinkraftstoff betrieben werden. Die elektrisch betriebene Drehmomentmaschine kann beispielsweise ein Gleichstrommotor sein, der auch als Generator betrieben werden kann. Die Drehmomentmaschine ist energieübertragend mit einer elektrischen Energiespeichereinrichtung verbunden, üblicherweise ein elektrisches Batteriesystem oder eine Brennstoffzelle. Bei einem Hybridantrieb kann die Antriebsleistung dabei wahlweise von dem Antriebsmotor, von der Drehmomentmaschine oder gleichzeitig von beiden erzeugt werden, wobei bei einer gleichzeitigen Nutzung des Antriebsmotor und der Drehmomentmaschine der jeweilige Anteil an der insgesamt auf ein Abtriebselement übertragenen Antriebsleistung variiert und an eine vorgegebene Zielgröße angepasst werden kann. Zudem kann die Drehmomentmaschine zeitweilig auch als Generator betrieben werden, um beispielsweise während eines Bremsvorgangs einen Anteil der Bewegungsenergie des Fahrzeugs in elektrische Energie umzuwandeln und in die hierfür geeignete Energiespeichereinrichtung einzuspeisen. Falls das Hybridantriebsstrangsystem mehrere elektrisch betriebene Drehmomentmaschinen aufweist können die mehreren Drehmomentmaschinen oftmals unabhängig voneinander angesteuert und betrieben werden, wobei einzelne oder alle Drehmomentmaschinen auch energieübertragend mit der Energiespeichereinrichtung verbunden sein können, um Bewegungsenergie in elektrische Energie umwandeln und speichern zu können.

Der Betrieb des Hybridantriebsstrangsystems wird von der Steuereinrichtung gesteuert. Dabei wird üblicherweise mit Hilfe eines kontinuierlich durchgeführten Optimierungsverfahrens versucht, den Betrieb im Hinblick auf eine oder mehrere Zielgrößen wie beispielsweise den Energieverbrauch oder den Einsatz der aktuell im Fahrzeug gespeicherten Energieformen zu optimieren. In vielen Fällen ist dabei der Ladezustand eine vorteilhafte Zielgröße für die Optimierung. Durch die Vorgabe einer angestrebten Ladezustandstrajektorie für einen zeitlichen Verlauf des Ladezustandes der Energiespeichereinrichtung kann zu jedem Zeitpunkt des Betriebs der Anteil der elektrisch betriebenen Drehmomentmaschine und damit einhergehend der Anteil des Verbrennungsmotors an der insgesamt benötigten Antriebsleistung vorgegeben und angesteuert werden.

Die Vorgabe einer angestrebten Ladezustandstrajektorie kann im Hinblick auf die jeweilige Zielgröße dadurch verbessert werden, dass während des Betriebs des Hybridantriebsstrangsystems eine Abschätzung der innerhalb eines Vorhersagezeitraums erwarteten Fahrwegslast vorgenommen und auf dieser Grundlage eine erwartete Fahrzeugantriebsleistung abgeschätzt wird, die während des Vorhersagezeitraums voraussichtlich benötigt wird, um das Fahrzeug entsprechend der Vorgaben eines Fahrers zu bewegen. Für die Abschätzung einer innerhalb des bevorstehenden Vorhersagezeitraums erwarteten Fahrwegslast können beispielsweise mit Hilfe von Globalpositionssensoren (GPS) und digitalen Landkartensystemen der aktuelle Fahrzeugort und ein voraussichtlich ausgewählter Fahrweg ermittelt werden. Dann kann beispielsweise anhand der von für den voraussichtlich ausgewählten Fahrweg ermittelten Strecken- und Geschwindigkeitsprofilen, insbesondere von Höhenprofilen und Geschwindigkeitsprofilen die voraussichtlich auftretende Fahrwegslast als eine der Kenngrößen für eine innerhalb des Vorhersagezeitraums erwartete Fahrzeugantriebsleistung abgeschätzt werden. Ausgehend von der abgeschätzten Fahrzeugantriebsleistung, die voraussichtlich innerhalb des Vorhersagezeitraums von dem Hybridantriebsstrangsystem aufgebracht werden muss, können dann mit geeigneten Steuerstrategien und Leistungsmanagementschemata die jeweilige Verwendung der elektrischen Drehmomentmaschine und des Verbrennungsmotors so vorgegeben und angesteuert werden, dass die eine oder mehreren Zielgrößen des dafür eingesetzten Optimierungsverfahrens bestmöglich erreicht werden, wobei für die auf das Abtriebselement übertragene Antriebsleistung üblicherweise ein möglichst geringer Energieverbrauch angestrebt wird.

Die in der Praxis häufig verwendeten Optimierungsverfahren setzten eine möglichst realitätsnahe Modellierung des Betriebs des Hybridantriebsstrangsystems während der auftretenden Fahrsituationen voraus. In vielen Fällen wird dabei eine multikriterielle Optimierung durchgeführt. Mit Hilfe einer Skalarisierung kann die Optimierung mit einem linearen oder nicht-linearen Optimierungsverfahren durchgeführt werden. Um einen möglichst effizienten Betrieb des Hybridantriebsstrangsystems zu ermöglichen ist jedoch sowohl für die Modellierung als auch für die Optimierung ein erheblicher Aufwand erforderlich. Unter günstigen Bedingungen kann dann auf einem erwarteten Fahrweg beispielsweise der für die Bewegung des Fahrzeugs entlang des Fahrwegs benötigte Energieaufwand optimiert, bzw. minimiert werden, wenn der Energieaufwand als eine Zielgröße der Optimierung vorgegeben wird. Es können zusätzlich weitere Zielgrößen vorgegeben und optimiert werden.

Es ist ebenfalls bekannt und Gegenstand intensiver Forschungstätigkeiten, neben einem möglichst geringen Energieverbrauch gleichzeitig weitere Zielgrößen für die Optimierung zu berücksichtigen und beispielsweise während des Betriebs zusätzlich eine möglichst geringe Schadstoffemission zu erzeugen. Die jeweilige Schadstoffemission kann sowohl bei der Modellierung als auch bei den Optimierungsverfahren berücksichtigt werden, wobei dadurch der für die Optimierung insgesamt erforderliche Aufwand deutlich erhöht wird. Weitere Zielgrößen können beispielsweise ein Temperaturmanagement für das Hybridantriebsstrangsystem oder eine Zustandsoptimierung der Energiespeichereinrichtung sein.

Während des Betriebs des Hybridantriebsstrangsystems lässt sich bei einer erwartungsgemäßen Fahrzeugbewegung entlang eines vorgegebenen bzw. im Rahmen der Abschätzung zutreffend ermittelten Fahrwegs oftmals der Energieverbrauch minimieren und der Betrieb des Hybridantriebsstrangsystems effizient gestalten. Je nach dem gewählten Optimierungsverfahren können zudem auch die Schadstoffemission minimiert bzw. weitere Zielgrößen für einen optimierten Betrieb des Hybridantriebsstrangsystems berücksichtigt werden.

Es hat sich gezeigt, dass sich mit einem längeren Vorhersagezeitraum oftmals bessere Optimierungsergebnisse erzielen lassen. Ein längerer Vorhersagezeitraum erfordert jedoch größere Datenmengen und führt zu einem zunehmend höheren Rechenaufwand. Mit den aktuell verfügbaren Kapazitäten einer elektronischen Datenverarbeitung in einem Fahrzeug lässt sich ein Vorhersagezeitraum von einigen Minuten realisieren. Sobald der Vorhersagezeitraum allerdings zeitlich ausgedehnt werden und beispielsweise mehr als 10 Minuten umfassen soll, steigt der Aufwand für die Erfassung und Verarbeitung der Datenmenge unangemessen stark an.

Es ist aus der Praxis bekannt, dass in Abhängigkeit von dem erwarteten Fahrwegverlauf sowie von weiteren Randbedingungen eine Dauer des Vorhersagezeitraums angepasst werden kann. Durch eine derartige Anpassung kann der Betriebsmodus des Hybridantriebsstrangsystems in Abhängigkeit von den aktuellen Bedingungen dynamisch angepasst werden. Mit derartigen Anpassungen lassen sich jedoch oftmals nur geringe Verbesserungen erzielen. Ein vergleichbares Verfahren ist beispielsweise in der Druckschrift DE 10 2020 104693 A1 und der nachveröffentlichten Druckschrift WC 2021/239402 A1 beschrieben.

Es ist ebenfalls bekannt, Steuereinrichtungen mit selbstlernenden Eigenschaften einzusetzen. Dabei können für bereits zurückgelegte Fahrwegverläufe die jeweiligen Fahrzeugeigenschaften gespeichert werden. Ein neuer erwarteter Fahrwegverlauf kann mit bereits gespeicherten Fahrwegverläufen verglichen werden, um auf der Grundlage der gespeicherten Fahrzeugeigenschaften die Optimierung und Steuerung des Hybridantriebsstrangsystems zu verbessern. Der hierfür erforderliche Aufwand ist jedoch vergleichsweise hoch.

Es wird deshalb als eine Aufgabe der vorliegenden Erfindung angesehen, ein eingangs genanntes Verfahren so weiterzuentwickeln, dass mit einem möglichst geringen Aufwand in dem Fahrzeug ein möglichst vorteilhafter Betrieb des Hybridantriebsstrangsystems erreicht werden kann.

Efindungsgemäß wird diese Aufgabe mit einem Verfahren zum Betreiben eines Fahrzeugs mit einem Hybridantriebsstrangsystem gelöst, wobei das Hybridantriebsstrangsystem einen Verbrennungsmotor und eine elektrisch betriebene Drehmomentmaschine aufweist, die energieübertragend mit einer Energiespeichereinrichtung verbunden ist, und wobei der Verbrennungsmotor und die Drehmomentmaschine von einer Steuereinrichtung gesteuert und über ein Hybridgetriebe mit einem Abtriebselement verbunden sind, wobei das Verfahren umfasst, dass für einen Vorhersagezeitraum ausgehend von einem erwarteten Fahrwegverlauf eine angestrebte Ladezustandstrajektorie für einen zeitlichen Verlauf eines Ladezustands der Energiespeichereinrichtung ermittelt wird, und dass der Betrieb des Hybridantriebsstrangsystems bei Berücksichtigung der abgeschätzten erwarteten Fahrzeugantriebsleistung unter Verwendung eines Optimierungsverfahrens im Hinblick auf die angestrebte Ladezustandstrajektorie optimiert und von der Steuereinrichtung gesteuert wird, wobei das Verfahren weiterhin umfasst, dass vor Beginn des Vorhersagezeitraums von einer externen Datenbank für den erwarteten Fahrwegverlauf eine erfahrungsbasierte Ladezustandstrajektorie abgerufen wird, die mindestens den Vorhersagezeitraum abdeckt, dass unter Berücksichtigung einer erwarteten Fahrwegslast eine erwartete Fahrzeugantriebsleistung abgeschätzt wird, dass für vorab festgelegte ungünstige Betriebsereignisse jeweils mindestens eine Optimierungsnebenbedingung vorgegeben wird, dass für jede Optimierungsnebenbedingung eine zugeordnete Ereignisreaktionsdauer vorgegeben ist, dass ausgehend von der abgeschätzten erwarteten Fahrzeugantriebsleistung abgeschätzt wird, ob innerhalb eines Ereignisvorhersagezeitraums ein ungünstiges Betriebsereignis eintreten wird, dass im Falle eines voraussichtlich eintretenden ungünstigen Betriebsereignisses über die zugeordnete zeitlich begrenzte Ereignisreaktionsdauer hinweg mindestens eine diesem ungünstigen Betriebsereignis zugeordnete Optimierungsnebenbedingung für die Steuerung des Betriebs des Hybridantriebstrangsystems vorgegeben wird, und dass die angestrebte Ladezustandstrajektorie ausgehend von der erfahrungsbasierten Ladezustandstrajektorie durch Modifikation mit der mindestens einen vorgegebenen Optimierungsnebenbedingung ermittelt wird.

Ungünstige Betriebsereignisse können beispielsweise Gangwechsel des Hybridgetriebes während des Betriebs des Verbrennungsmotors oder eine demnächst erforderliche Zuschaltung des Verbrennungsmotors nach einer über eine längere Dauer ausschließlich durch die Drehmomentmaschine erzeugten Antriebsleistung sein. Durch eine geeignet vorgegebene Optimierungsnebenbedingung kann für jedes ungünstige Betriebsereignis die ungünstige Betriebssituation entweder vermieden werden oder in eine weniger ungünstige Betriebssituation überführt werden.

So kann beispielsweise erreicht werden, dass eine unerwünscht hohe Schadstoffemission des Verbrennungsmotors bei einem Gangwechsel deutlich reduziert wird, indem als Optimierungsnebenbedingung eine zeitlich begrenzte Veränderung einer Zielgröße der Optimierung bewirkt wird. Um beispielsweise kurzzeitig einen erhöhten Anteil der von der Drehmomentmaschine erzeugten Antriebsleistung zu bewirken kann als Optimierungsnebenbedingung der Ladezustand der angestrebte Energiespeichereinrichtung für einen begrenzten Zeitraum deutlich herabgesetzt werden. Im Rahmen des Optimierungsverfahrens wird dann der Anteil der elektrischen Antriebsleistung erhöht, da aufgrund der Optimierungsnebenbedingung aus der Energiespeichereinrichtung elektrische Energie entnommen werden kann. Gleichzeitig wird der Anteil der von dem Verbrennungsmotor erzeugten Antriebsleistung entsprechend verringert, wodurch beispielsweise die Schadstoffemission des Verbrennungsmotors reduziert werden kann.

Für jede Optimierungsnebenbedingung ist eine zugeordnete Ereignisreaktionsdauer vorgegeben. Die Ereignisreaktionsdauer gibt diejenige Zeitdauer vor, während der nach dem Feststellen eines bevorstehenden ungünstigen Betriebsereignisses die zugeordnete Optimierungsnebenbedingung bei der Durchführung des Optimierungsverfahrens vorgegeben wird. Bei der Ereignisreaktionsdauer kann es sich um eine für alle Optimierungsnebenbedingungen gleich vorgegebene und identisch übereinstimmende Ereignisreaktionsdauer handeln. Es ist ebenfalls möglich, dass für jedes ungünstige Betriebsereignis und gegebenenfalls für jede einzelne Optimierungsnebenbedingung eine individuelle Ereignisreaktionsdauer vorgegeben ist, während der die Optimierungsnebenbedingung vorgegeben und bei der Durchführung der Optimierung berücksichtigt werden muss.

Da die zeitlich begrenzte Ereignisreaktionsdauer deutlich kürzer als die gesamte Fahrtdauer vorgegeben werden kann und beispielsweise weniger als eine Minute oder lediglich einige Sekunden betragen kann, kann ohne weiteres über die Fahrdauer hinweg die angestrebte Ladezustandstrajektorie so angepasst werden, dass über die Fahrdauer hinweg die durch die ungünstigen Betriebsereignisse bewirkten Abweichungen von der angestrebten Ladezustandstrajektorie sehr gering sind und insbesondere am Ende der Fahrtdauer der angestrebte Ladezustand erreicht wird. Gleichzeitig können durch das frühzeitige Erkennen von ungünstigen Betriebsereignissen deren nachteiligen Auswirkungen gemildert werden, ohne dass diese nachteiligen Auswirkungen vollständig modelliert und bei dem Optimierungsverfahren als weitere Parameter bzw. Zielgrößen dauerhaft berücksichtigt werden müssten.

Durch den Zugriff auf eine externe Datenbank und die Verwendung von dort hinterlegten Ladezustandstrajektorien kann mit vergleichsweise geringem Datenverarbeitungsaufwand in dem Fahrzeug für einen langen Vorhersagezeitraum eine erfahrungsbasierte Ladezustandstrajektorie abgerufen und für ein Optimierungsverfahren zur Verfügung gestellt werden.

Die erfahrungsbasierte Ladezustandstrajektorie kann weiterhin durch vorausgegangene Modellierungen und Optimierungsverfahren ermittelt und eventuell bereits unter Berücksichtigung von weiteren vorbekannten Informationen modifiziert worden sein, wobei diese Modellierungen und Optimierungsverfahren außerhalb des Fahrzeugs und gegebenenfalls lange vor dem Abruf der erfahrungsbasierten Ladezustandstrajektorie von der externen Datenbank beispielsweise in zentralen Datenverarbeitungseinrichtungen durchgeführt wurden, die datenübertragend mit der externen Datenbank in Verbindung stehen. Da die hierfür erforderlichen Berechnungen außerhalb des Fahrzeugs durchgeführt werden, kann der in dem Fahrzeug anfallende Aufwand sehr geringgehalten werden.

Ausgehend von der außerhalb des Fahrzeugs ermittelten erfahrungsbasierten Ladezustandstrajektorie wird anschließend in dem Fahrzeug die erfahrungsbasierte Ladezustandstrajektorie durch mindestens eine Optimierungsnebenbedingung modifiziert, um eine möglichst gute Anpassung der angestrebten Ladezustandstrajektorie an die aktuelle Fahrsituation zu ermöglichen. Dabei können ungewöhnliche Verkehrssituationen wie beispielsweise ein Stau oder eine Baustelle berücksichtigt werden. Es ist ebenfalls möglich, aktuelle Fahrzeugeigenschaften, Umgebungsbedingungen oder Vorgaben eines Fahrers zu berücksichtigen. Anschließend kann die derart ermittelte angestrebte Ladezustandstrajektorie dazu verwendet werden, um mit üblichen Optimierungsverfahren und mit Hilfe der Steuereinrichtung den Betrieb des Hybridantriebsstrangsystems so durchzuführen, dass die angestrebte Ladezustandstrajektorie erreicht bzw. umgesetzt wird.

Die von der externen Datenbank abgerufene erfahrungsbasierte Ladezustandstrajektorie kann einen beliebig langen Zeitraum abdecken. So kann die erfahrungsbasierte Ladezustandstrajektorie beispielsweise nach einer Eingabe des gewünschten Ziels für die bevorstehende Nutzung des Fahrzeugs den gesamten Fahrwegverlauf umfassen. Sofern der Fahren während der Fahrt bis zu dem gewünschten Ziel nicht von dem betreffenden Fahrwegverlauf abweicht kann mit einem einmaligen Abruf der betreffenden erfahrungsbasierten Ladezustandstrajektorie die wesentliche Grundlage für die anschließende Ermittlung der für diese Fahr angestrebten Ladezustandstrajektorie zur Verfügung gestellt werden. Die erfahrungsbasierte Ladezustandstrajektorie ist zweckmäßigerweise länger als ein Vorhersagezeitraum, der während des Betriebs des Hybridantriebsstrangsystems für die Optimierung des Betriebs des Hybridantriebsstrangsystems vorgegeben wird, damit ausgehend von der erfahrungsbasierten Ladezustandstrajektorie eine den Vorhersagezeitraum vollständig abdeckende angestrebte Ladezustandstrajektorie ermittelt werden kann, welche die Grundlage für den optimierten Betrieb des Hybridantriebsstrangsystems bildet.

Der für die Beschaffung der erfahrungsbasierten Ladezustandstrajektorie und für die Ermittlung bzw. Anpassung der angestrebten Ladezustandstrajektorie erforderliche Aufwand im Fahrzeug kann dadurch sehr gering gehalten werden, obwohl eine sehr große Informationsmenge berücksichtigt und ein ebenfalls sehr großer Modellierungs- und Optimierungsaufwand bei der Ermittlung der erfahrungsbasierten Ladezustandstrajektorie vorab vorgenommen werden kann.

Es ist ebenfalls möglich, für die erfahrungsbasierte Ladezustandstrajektorie eine große Anzahl einzelner Informationsdatenpunkte je Zeiteinheit vorzugeben, da die erfahrungsbasierte Ladezustandstrajektorie vorab mit externen Datenverarbeitungseinrichtungen ermittelt werden kann und lediglich die für die erfahrungsbasierte Ladezustandstrajektorie erforderliche Datenmenge an das Fahrzeug übermittelt werden muss. Bei der Ermittlung der angestrebten Ladezustandstrajektorie können dann weniger Informationsdatenpunkte je Zeiteinheit bzw. Stützstellen für die nachfolgenden Optimierungsverfahren verwendet werden. Dadurch lässt sich der in dem Fahrzeug erforderliche Aufwand für den Betrieb des Hybridantriebsstrangsystems weiter reduzieren, ohne dass dadurch die Qualität des Betriebs nachteilig beeinflusst werden muss.

Optional ist vorgesehen, dass die erfahrungsbasierte Ladezustandstrajektorie auf der Grundlage von Betriebsdaten von Hybridantriebsstrangsystemen mehrerer Fahrzeuge ermittelt wurde. Dadurch enthält die erfahrungsbasierte Ladezustandstrajektorie Informationen mehrerer Fahrzeuge. Die erfahrungsbasierte Ladezustandstrajektorie kann eine gemittelte Ladezustandstrajektorie repräsentieren, bei welcher die Ladezustandstrajektorien mehrerer hinsichtlich einer Fahrzeugkenngröße vergleichbarer Fahrzeuge durch ein geeignetes Verfahren gemittelt bzw. berücksichtigt sind. Es ist ebenfalls möglich, anhand von weiteren Kenngrößen wie beispielsweise ein individuelles Fahrverhalten oder Umgebungsbedingungen während des jeweiligen Fahrwegverlaufs diejenigen gespeicherten Ladezustandstrajektorien stärker zu berücksichtigen oder bevorzugt auszuwählen, bei denen eine höhere Übereinstimmung mit den weiteren Kenngrößen vorliegt.

Gemäß einer vorteilhaften Ausgestaltung des Erfindungsgedankens ist vorgesehen, dass die von der Datenbank abgerufene erfahrungsbasierte Ladezustandstrajektorie aus einer Anzahl von in der Datenbank hinterlegten Ladezustandstrajektorien ausgewählt wird, wobei für die Auswahl mindestens eine Fahrzeugkenngröße des Hybridantriebsstrangsystems als Auswahlkriterium verwendet wird. Mit Hilfe der Fahrzeugkenngröße kann beispielsweise eine für den betreffenden Fahrzeugtyp bestmöglich vorgegebene Ladezustandstrajektorie ausgewählt werden. Es können bei mehreren Ladezustandstrajektorien, die für den betreffenden Fahrzeugtyp zur Verfügung stehen, weitere Fahrzeugkenngrößen wie beispielsweise die bereits zurückgelegten Fahrwege oder ein Alter des Hybridantriebsstrangsystems berücksichtigt werden.

Alternativ hierzu oder zusätzlich zu einer Berücksichtigung von Fahrzeugkenngrößen kann optional vorgesehen sein, dass die von der Datenbank abgerufene erfahrungsbasierte Ladezustandstrajektorie aus einer Anzahl von in der Datenbank hinterlegten Ladezustandstrajektorien ausgewählt wird, wobei für die Auswahl mindestens eine Fahrtenkenngröße als Auswahlkriterium verwendet wird, die ausgehend von mindestens einer Betriebskenngröße des Fahrzeugs ermittelt wurde, die während mindestens einer zurückliegenden Fahrt mit dem Fahrzeug ermittelt wurde. Gegebenenfalls kann eine Anzahl derselben oder gleichartiger Fahrten für eine vorab durchgeführte Ermittlung der erfahrungsbasierten Ladezustandstrajektorie berücksichtigt werden, die in der Vergangenheit mit demselben Fahrzeug und gegebenenfalls auch demselben Fahrer zurückgelegt wurden. Dies ist beispielsweise bei Berufspendlern oder bei Berufskraftfahrern mit wiederholten Fahrten innerhalb desselben Fahrwegverlaufs möglich und vorteilhaft, da die Erfahrungen aus bereits zurückgelegten Fahrten mit demselben Fahrzeug und gegebenenfalls auch mit demselben Fahrer berücksichtigt und für eine möglichst optimale Steuerung des Hybridantriebsstrangsystems berücksichtigt und verwendet werden können. Auf diese Weise können die Ergebnisse von vergangenen Fahrten mit dem betreffenden Fahrzeug bei der Auswahl der erfahrungsbasierten Ladezustandstrajektorie berücksichtigt werden und eine vorteilhafte Anpassung der erfahrungsbasierten Ladezustandstrajektorie an die aktuellen Gegebenheiten des betreffenden Fahrzeugs erfolgen.

Gemäß einer weiteren vorteilhaften Ausgestaltung des Erfindungsgedankens kann zudem vorgesehen sein, dass mindestens eine Optimierungsnebenbedingung vor Beginn des Vorhersagezeitraums von einem Fahrer vorgegeben wird. So kann der Fahrer beispielsweise eine möglichst rasche Ankunft bzw. kurze Fahrtdauer oder aber eine möglichst energieeffiziente Fahrweise vorgeben, um dadurch die Steuerung des Hybridantriebsstrangsystems während der Fahrt zu beeinflussen.

Grundsätzlich kann mit einer geeignet vorgegebenen Optimierungsnebenbedingung auch eine kurzfristige Abweichung der angestrebten Ladezustandstrajektorie von der erfahrungsbasierten Ladezustandstrajektorie bewirkt werden, um kurzfristige Ereignisse oder plötzlich auftretende Situationen zu berücksichtigen, die in der erfahrungsbasierten Ladezustandstrajektorie nicht erfasst sein können.

In vorteilhafter Weise ist vorgesehen, dass mindestens ein vorab festgelegtes ungünstiges Betriebsereignis eine erhöhte Schadstoffemission bewirken würde, und dass mit der zugeordneten Optimierungsnebenbedingung eine demgegenüber reduzierte Schadstoffemission bewirkt wird. Eine vollständige Erfassung und Modellierung der Schadstoffemissionen während des Betriebs des Hybridantriebsstrangsystems sowie eine vollständige und kontinuierliche Berücksichtigung der Schadstoffemission durch zusätzliche Parameter bzw. Zielgrößen bei der Optimierung wäre mit einem ganz erheblichen Mehraufwand im Vergleich zu den aktuell verwendeten Optimierungsverfahren verbunden. Die für die Schadstoffemissionen besonders ungünstigen Betriebsereignisse sind jedoch oftmals nur von vergleichsweise kurzer Dauer und können im Voraus durch Messungen an einem Hybridantriebsstrangsystem in einem Fahrzeugprüfstand vergleichsweise gut erfasst und charakterisiert werden. Gegebenenfalls können die benötigten Messungen auch in einem Motorprüfstand oder Antriebsstrangprüfstand durchgeführt werden, wodurch sich der Aufwand weiter reduzieren lässt. Für eine Anzahl von ungünstigen Betriebsereignissen können jeweils eine oder sogar mehrere Optimierungsnebenbedingungen ermittelt und vorgegeben werden, mit deren Hilfe derart auf das Optimierungsverfahren eingewirkt wird, dass die Schadstoffemission deutlich reduziert werden kann, ohne dass dadurch der Energieverbrauch merklich erhöht oder der Ladezustand des Energiespeichersystems über einen nennenswerten Zeitraum nachteilig beeinflusst wird.

Einer Ausgestaltung des Erfindungsgedankens zufolge ist vorgesehen, dass anhand einer vorgegebenen Priorisierung eine der diesen ungünstigen Betriebsereignissen zugeordneten Optimierungsnebenbedingungen ausgewählt und für die Steuerung des Betriebs des Hybridantriebsstrangsystems vorgegeben wird, falls dem ermittelten ungünstigen Betriebsereignis mehr als eine Optimierungsnebenbedingung zugeordnet ist. Durch eine geeignete Priorisierung, die im Voraus beispielsweise anhand von Messungen an einem Hybridantriebsstrangsystem in einem Fahrzeugprüfstand entwickelt und vorgegeben werden kann, lässt sich in einfacher Weise und ohne nennenswerten Aufwand diejenige Optimierungsnebenbedingung auswählen, mit welcher die nachteiligen Auswirkungen des ungünstigen Betriebsereignisses bestmöglich reduziert oder vermieden werden können.

In gleicher Weise ist es gemäß einer weiteren Ausgestaltung des Erfindungsgedankens vorgesehen, dass anhand einer vorgegebenen Priorisierung eine zugeordnete Optimierungsnebenbedingung ausgewählt und für die Steuerung des Betriebs des Hybridantriebsstrangsystems vorgegeben wird, falls mehr als ein ungünstiges Betriebsereignis innerhalb des Ereignisvorhersagezeitraums ermittelt wird. Insbesondere innerhalb einer städtischen Umgebung können unvorhersehbare Ereignisse wie sich plötzlich ändernde Lichtsignale von Ampeln, andere Verkehrsteilnehmer oder rasch wechselnde Fahrwege dazu führen, dass innerhalb des Ereignisvorhersagezeitraums oder sogar innerhalb der Ereignisreaktionsdauer zwei oder mehr ungünstige Betriebsereignisse vorhergesagt bzw. erwartet werden, sodass für verschiedene ungünstige Betriebsereignisse gegebenenfalls unterschiedliche oder sogar widersprüchliche Optimierungsnebenbedingungen vorgesehen wären und mit einer geeigneten üblicherweise wahrscheinlichkeitsbasierten Priorisierung diejenige Optimierungsnebenbedingung identifiziert und ausgewählt werden kann, die für die zwei oder mehreren ungünstigen Betriebsereignisse deren nachteilige Auswirkungen bestmöglich reduzieren kann.

Die Priorisierung kann dabei beispielsweise durch eine eindimensionale Gewichtung der verschiedenen Optimierungsnebenbedingungen vorgegeben werden. Es ist ebenfalls möglich, eine mehrdimensionale Priorisierung vorab zu ermitteln und vorzugeben, sodass die Priorisierung für unterschiedliche Zielgrößen angepasst und vorgegeben werden kann. Es ist weiterhin denkbar, dass während einer Fahrsituation mindestens eine die Fahrsituation beschreibende Kenngrößen erfasst wird und in Abhängigkeit von der mindestens einen erfassten Kenngröße eine daran angepasste oder für die erfasste Kenngröße vorgesehene Priorisierung für die Auswahl der Optimierungsnebenbedingung verwendet wird.

Im Hinblick auf eine nachträgliche Anpassung und Verbesserung des erfindungsgemäßen Verfahrens ist optional vorgesehen, dass während des Betriebs des Hybridantriebsstrangsystems Betriebskenngrößen erfasst werden, und dass ausgehend von den erfassten Betriebskenngrößen die Priorisierung der zugeordneten Optimierungsnebenbedingungen überprüft und gegebenenfalls geändert wird. Die Betriebskenngrößen wie beispielsweise Geschwindigkeiten, Beschleunigungen oder auch bevorzugte Fahrwegentscheidungen ermöglichen es, eine individuelle Fahrweise zu erkennen und in Abhängigkeit von den einzelnen ungünstigen Betriebsereignissen die Priorisierung der mehreren möglichen Optimierungsnebenbedingungen zu verändern und anzupassen. So können beispielsweise eine verbrauchsorientierte Fahrweise oder eine sportliche Fahrweise eines Fahrers anhand der während einer Fahrzeugbewegung entlang eines Fahrwegs erfassten Betriebskenngrößen identifiziert bzw. unterschieden werden, um anschließend die Priorisierung der mehreren Optimierungsnebenbedingungen zu verändern und an die individuelle Fahrweise anzupassen. Die Betriebskenngrößen können dabei mit geeigneten Sensoren erfasst oder aber auf der Grundlage anderer Kenngrößen abgeschätzt oder ermittelt werden. Es ist ebenfalls möglich, dass ein Fahrer über ein Bordkommunikationssystem eine von dem Fahrer gewünschte Fahrweise vor oder während einer Fahr vorgibt und die Priorisierung entsprechend angepasst wird.

Eine erfasste Betriebskenngröße kann auch eine Zielgröße wie beispielsweise der tatsächliche mit dem Betrieb des Hybridantriebsstrangsystems bewirkte Energieverbrauch oder eine messbare Schadstoffemission sein, sodass während des Betriebs die Auswirkungen des erfindungsgemäßen Verfahrens erfasst und gegebenenfalls für eine geregelten Eingriff in die Optimierung des Betriebs berücksichtigt werden können.

Es ist ebenfalls denkbar, dass eine oder mehrere Betriebskenngrößen erfasst und für eine in zeitlichen Abständen erfolgende oder kontinuierliche Anpassung des Optimierungsverfahrens verwendet werden. Auf diese Weise können die tatsächlichen Auswirkungen der über die zeitlich begrenzte Ereignisreaktionsdauer hinweg erfolgenden Beeinflussung des Optimierungsverfahrens auf den Betrieb des Hybridantriebstrangsystems erfasst oder von den Betriebskenngrößen ausgehend ermittelt werden. Durch einen Vergleich von der während einer Fahrsituation tatsächlich erfolgenden Reduzierung der nachteiligen Auswirkungen der ungünstigen Betriebsereignisse mit vorab erfassten nachteiligen Auswirkungen, die ohne die Anwendung des erfindungsgemäßen Verfahrens eintreten, kann die Effizienz oder auch die Sinnhaftigkeit einzelner Optimierungsnebenbedingungen überprüft und gegebenenfalls durch eine veränderte Priorisierung angepasst werden.

Es ist ebenfalls denkbar, dass im Falle eines voraussichtlich eintretenden ungünstigen Betriebsereignisses während einer vorgegebenen maximalen Reaktionsdauer Optimierungskenngrößen erfasst werden, und dass die Ereignisreaktionsdauer beendet wird, sobald die erfassten Optimierungskenngrößen ein vorgegebenes Ereignisreaktionsbeendigungskriterium erfüllen. So kann beispielsweise durch eine Erfassung und Auswertung von Betriebskenngrößen abgeschätzt werden, ob die mit der Optimierungsnebenbedingung angestrebte Beeinflussung des Betriebs des Hybridantriebsstrangsystems bereits bewirkt oder in ausreichender Weise eingeleitet wurde, sodass es ab dann nicht mehr notwendig ist, mit der Vorgabe einer Optimierungsnebenbedingung das Optimierungsverfahren weiter zu beeinflussen. Es ist ebenfalls möglich, bei Bedarf die Ereignisreaktionsdauer zu verlängern, um den mit der Optimierungsnebenbedingung angestrebten Effekt herbeizuführen oder gegebenenfalls zu verstärken.

Ein in der Praxis besonders bedeutsamer Bestandteil der Schadstoffemissionen von Verbrennungsmotoren sind die sogenannten Partikelemissionen. Durch Anwendung des erfindungsgemäßen Verfahrens wird es ermöglicht, die Partikelemissionen zu reduzieren, ohne Parameter des Fahrwegverlaufs an sich ändern zu müssen, insbesondere Geschwindigkeit und/ oder Beschleunigung, und ohne, dass umfangreiche Berechnungen oder Optimierungen erforderlich sind.

Fahrsituationen, bei denen das erfindungsgemäße Verfahren besonders vorteilhaft ist, sind die sogenannte Hochgeschwindigkeitsabschnitte, wie sie beispielsweise bei Autobahnfahrten auftreten. Bei den aus dem Stand der Technik bekannten Optimierungsverfahren ist es so, dass aufgrund des relativ geringen Drehmoments, das zum Halten der Fahrgeschwindigkeit erforderlich ist, der Verbrennungsmotor des Hybridantriebsystems abgeschaltet wird. Der Verbrennungsmotor kühlt hierdurch aus. Die Erfahrung zeigt, dass es in Hochgeschwindigkeitsabschnitten vermehrt zu Überholvorgängen kommt, die aus subjektiver Wahrnehmung der Umgebung durch ein das Kraftfahrzeug führende Person, oder infolge der Information über die vorausliegende Strecke, beispielsweise Anschlussstellen, erfolgen. Da im Rahmen derartiger Überholvorgänge mehr Drehmoment erforderlich ist, als die Drehmomentmaschine zur Verfügung stellen kann, muss der Verbrennungsmotor zugeschaltet werden.

Bei den aus dem Stand der Technik bekannten Verfahren, erfolgen derartige Überholvorgänge bei abgekühltem Verbrennungsmotor. Ein derartig abgekühlter Verbrennungsmotor emittiert jedoch übermäßig viele Partikel, weil sowohl der Verbrennungsmotor selbst, als auch ein mit dem Verbrennungsmotor in Wirkverbindung gebrachtes Abgasreinigungssystem nicht auf ihre jeweilige Betriebstemperatur gebracht sind.

Demgegenüber ist es bei dem erfindungsgemäßen Verfahren vorteilhafterweise vorgesehen, dass die erfahrungsbasierte Ladezustandstrajektorie auf die für den Vorhersagezeitraum angestrebte Ladezustandstrajektorie adaptiert wird. Bei der zuvor beschriebenen Hochgeschwindigkeitsphase führt die Anwendung des erfindungsgemäßen Verfahrens dazu, dass die angestrebte Ladezustandstrajektorie erhöht und so ein verlängerter Betrieb des Verbrennungsmotors erreicht wird. Hierdurch ist ein Anteil an Abkühlphase des Verbrennungsmotors verringerbar, wodurch auch die Partikelemissionen verringerbar sind.

Ein weiterer relevanter Betriebsparameter von Hybridantriebsstrangsystemen ist der Zustand der dem Hybridantriebsstrang zugeordneten Energiespeichereinrichtung. Ein überwiegender Teil der bekannten Energiespeichereinrichtungen nimmt Schaden, wenn es zu einer sogenannten Tiefentladung kommt. Tiefentladung im Sinne des Erfindungsgedankens bezeichnet das Absinken des Ladezustands der Energiespeichereinrichtung unter einen einrichtungsspezifischen Wert, die sogenannte Entladeschlussspannung. Der Zustand der Tiefentladung ist dadurch gekennzeichnet, dass die Energiespeichereinrichtung soweit entladen wird, dass die durch die Energiespeichereinrichtung zur Verfügung stellbare elektrische Spannung unter diese Entladeschlussspannung absinkt. Die Entladeschlussspannung ist ein Paramater der Energiespeichereinrichtung, der insbesondere von der Art und dem Aufbau der Energiespeichereinrichtung abhängt.

Um eine Tiefentladung der Energiespeichereinrichtung zu verhindern ist es daher bei dem erfindungsgemäßen Verfahren vorgesehen, dass eine der Optimierungsnebenbedingungen, anhand derer die angestrebte Ladezustandstrajektorie aus der erfahrungsbasierten Ladezustandstrajektorie ermittelt wird, derjenige Ladezustand ist, der in keinem Fall unterschritten werden darf. Es ist erfindungsgemäß vorgesehen, dass die angestrebte Ladezustandstrajektorie an einen Ziel-Ladezustand angepasst sein kann, wobei der Ziel-Ladezustand so gewählt ist, dass eine Tiefentladung der Energiespeichereinrichtung während des gesamten Fahrwegs verhindert ist.

Besonders bevorzugt ist der Ziel-Ladezustand auch entlang des Fahrwegs veränderbar, sodass insbesondere wechselnde Umwelteinflüsse berücksichtigbar sind. So führen beispielsweise wechselnde Außentemperaturen, aber auch Veränderungen einer Betriebstemperatur der Energiespeichereinrichtung dazu, dass der Zustand der Tiefentladung bei variierenden tatsächlichen Ladezuständen erreicht sein kann.

Ein weiteres Optimierungskriterium für die Hybridantriebsstrangsysteme, dass insbesondere in der Praxis relevant ist, ist die sogenannte Fahrbarkeit eines mit dem Hybridantriebsstrangsystem ausgerüsteten Kraftfahrzeugs. Fahrbarkeit bezeichnet dabei vorliegend eine subjektive Eigenschaft eines Kraftfahrzeugs, die jedoch mittels physikalischer Parameter messbar und auf der Grundlage mathematischer Formen formulierbar ist.

Bei einer vorteilhaften Umsetzung des Erfindungsgedankens ist es daher vorgesehen, dass mittels des erfindungsgemäßen Verfahrens die Fahrbarkeit des mit dem Hybridantriebsstrang ausgerüsteten Kraftfahrzeugs verbesserbar ist, indem durch Anpassung zumindest einer Optimierungsnebenbedingungen die Anzahl der entlang des Fahrwegs erforderlichen Starts des Verbrennungsmotors verringerbar und/ oder eine Betriebszeit des Verbrennungsmotors bei niedrigen Geschwindigkeiten verringerbar ist. Niedrige Geschwindigkeit im Sinne des Erfindungsgedankens meint dabei Geschwindigkeiten von weniger als 60 km/h, bevorzugt von weniger als 50 km/h.

Es ist vorteilhafterweise vorgesehen, dass die anzupassende Optimierungsnebenbedingung der Ziel-Ladezustand des Energiespeichereinrichtung ist. Besonders bevorzugt wird der Ziel-Ladezustand abgesenkt, wenn weitere Motorstart verhindert werden sollen. Eine Entscheidung, ob Motorstarts verhindert werden sollen, kann beispielsweise auf der Grundlage eines Bewertungsfaktors erfolgen.

Es ist daher erfindungsgemäß vorteilhafterweise vorgesehen, dass das Verfahren auch einen Bewertungsschritt umfasst, in dem zunächst ein Bewertungsfaktor bestimmt wird, wobei anschließend ermittelt wird, ob auf der Grundlage des ermittelten Bewertungsfaktors weitere Motorstarts erfolgen sollen. Ein vorteilhafterweise vorgesehene Möglichkeit zur Ermittlung des Bewertungsfaktors umfasst das Bestimmen einer Zeit T_{norm,} die durchschnittlich zwischen zwei Motorstarts eines bekannten Hybridantriebsstrangsystems vergeht. Diese Zeit Tₙₒᵣₘ wird entlang des Fahrwegs permanent mit der Anzahl der bereits erfolgten Motorstarts multipliziert und anschließend durch die Zeit, die seit dem Beginn der Fahrt vergangen ist, geteilt. Ist der sich daraus ergebende Bewertungsfaktor größer als 1, so haben bisher überdurchschnittlich viele Motorstarts stattgefunden und weitere Motorstarts sollen verhindert werden. Dabei ist es vorteilhafterweise vorgesehen, dass auch der tatsächliche Ladezustand des Energiespeichereinrichtung berücksichtigt wird, sodass eine Tiefentladung der Energiespeichereinrichtung verhinderbar ist.

Es ist darüber hinaus auch vorgesehen, dass das erfindungsgemäße Verfahren dahingehend angepasst sein kann, dass das Optimierungskriterium Eigenschaften einer Position des mit dem Hybridantriebsstrangsystem ausgerüsteten Fahrzeugs entlang des Fahrwegs sind. So ist es beispielsweise möglich, dass im Bereich einer Stadt Motorstarts möglichst verhindert werden, um insbesondere dort eine Schadstoffbelastung zu verringern. Die Erfindung betrifft auch ein Hybridantriebsstrangsystem für ein Fahrzeug, wobei das Hybridantriebsstrangsystem eine Steuereinrichtung, einen nicht elektrisch betriebenen Antriebsmotor und eine elektrisch betriebene Drehmomentmaschine aufweist, die energieübertragend mit einer Energiespeichereinrichtung verbunden ist, und wobei der Antriebsmotor und die Drehmomentmaschine von der Steuereinrichtung gesteuert und über ein Hybridgetriebe mit einem Abtriebselement verbunden sind, dadurch gekennzeichnet, dass die Steuereinrichtung derart eingerichtet ist, dass bei einem Betrieb des Hybridantriebsstrangsystems ein vorangehend beschriebenes Verfahren durchgeführt wird.

Nachfolgend werden verschiedene Ausgestaltungen des Erfindungsgedankens näher erläutert, die in der Zeichnung exemplarisch dargestellt sind. Es zeigt:
Figur 1 eine schematische Darstellung eines Hybridantriebsstrangsystems mit einem Verbrennungsmotor, mit einer elektrischen Drehmomentmaschine, mit einer Energiespeichereinrichtung, mit einer Steuereinrichtung und mit einer Datenübertragungseinrichtung zum Abrufen von Informationen zu einer erfahrungsbasierten Ladezustandstrajektorie von einer externen Datenbank,
Figur 2 eine schematische Darstellung eines erfindungsgemäßen Verfahrensablaufs zum Betreiben des in Figur 1 dargestellten Hybridantriebsstrangsystems,
Figur 3 eine schematische Darstellung eines erfindungsgemäßen Verfahrensablaufs während der Durchführung einer Ermittlung und Anpassung der angestrebten Ladezustandstrajektorie ausgehend von der erfahrungsbasierten Ladezustandstrajektorie,
Figuren 4 bis 6b schematische Darstellungen des Ladezustands entlang eines Fahrwegverlaufs,
Figur 7a einen Verlauf des Bewertungsfaktors entlang eines Fahrwegverlaufs,
Figur 7b angestrebte Ladezustandstrajektorien entlang des Fahrwegverlaufs aus Figur 7a,
Figur 8a ein Geschwindigkeitsprofil entlang eines Fahrwegverlaufs,
Figur 8b Verläufe kumulierter Anzahlen an Motorstarts entlang des Fahrwegverlaufs aus Figur 8a und
Figur 8c Verläufe von Ladezuständen entlang des Fahrwegverlaufs aus den Figuren 8a und 8b.

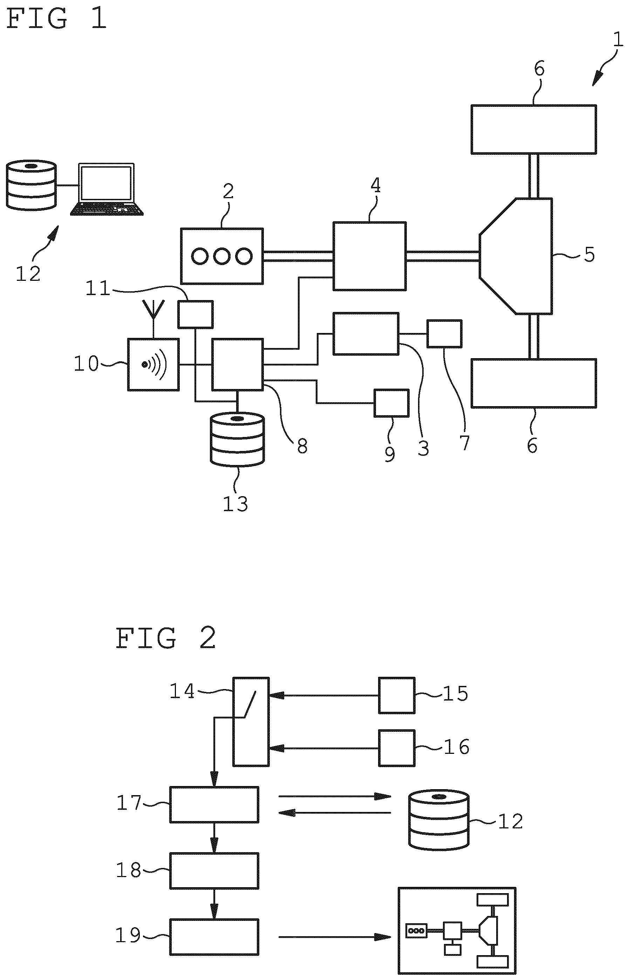

In Figur 1 ist exemplarisch eine erfindungsgemäße Ausgestaltung eines Hybridantriebsstrangsystems 1 dargestellt. Das Hybridantriebsstrangsystem 1 weist einen Verbrennungsmotor 2 und eine elektrisch betriebene Drehmomentmaschine 3 auf, die über ein gemeinsames Hybridgetriebe 4 mit einem Abtriebselement 5 verbunden sind, über welches ein mit dem Hybridantriebsstrangsystem 1 erzeugtes Drehmoment auf zwei Antriebsräder 6 eines nicht näher dargestellten Fahrzeugs übertragen werden kann. Die elektrische Drehmomentmaschine 3 ist energieübertragend mit einer elektrischen Energiespeichereinrichtung 7 verbunden. Die elektrische Drehmomentmaschine 3 kann sowohl zum Antreiben der Antriebsräder 6 verwendet werden und Energie aus der Energiespeichereinrichtung 7 in Bewegungsenergie des Fahrzeugs umwandeln, oder aber als Generator verwendet werden und Bewegungsenergie des Fahrzeugs oder durch den Verbrennungsmotor 2 erzeugte Bewegungsenergie in elektrische Energie umwandeln und der Energiespeichereinrichtung 7 zuführen. Bei der Drehmomentmaschine 3 kann es sich beispielsweise um einen auch als Generator betreibbaren Gleichstrommotor handeln. Es ist ebenfalls möglich, mehrere elektrische Drehmomentmaschinen 3 in das Hybridantriebsstrangsystem 1 einzubinden. An Stelle des Verbrennungsmotors 2 kann auch ein anderer nicht elektrisch betriebene Antriebsmotor verwendet werden.

Das Hybridantriebsstrangsystem 1 weist eine Steuereinrichtung 8 auf. Die Steuereinrichtung 8 ist signalübertragend mit dem Verbrennungsmotor 2, mit der Drehmomentmaschine 3 und mit dem Hybridgetriebe 4 verbunden, wobei mit der Steuereinrichtung 8 der jeweilige Betrieb des Verbrennungsmotors 2, der Drehmomentmaschine 3 und des Hybridgetriebes 4 gesteuert werden kann. Die Steuereinrichtung 8 kann weiterhin mit mindestens einem Sensor 9 verbunden sein, mit welchem Betriebskenngrößen wie beispielsweise die aktuelle Fahrzeuggeschwindigkeit etc. erfasst und an die Steuereinrichtung 8 übertragen werden können.

Die Steuereinrichtung 8 ist weiterhin signalübertragend mit einer Datenübertragungseinrichtung 10 und mit einer Datenverarbeitungseinrichtung 11 verbunden. Mit Hilfe der Datenübertragungseinrichtung 10 können Informationen über eine erfahrungsbasierte Ladezustandstrajektorie von einer externen Datenbank 12 abgerufen und in einer internen Datenbank 13 in dem Fahrzeug abgespeichert werden. Ausgehend von der derart zur Verfügung gestellten erfahrungsbasierten Ladezustandstrajektorie kann mit der Datenverarbeitungseinrichtung 11 beispielsweise in Kenntnis aktueller Umgebungsbedingungen oder Fahrerwünsche eine angestrebte Ladezustandstrajektorie ermittelt werden, die von der Steuereinrichtung 8 zum Ansteuern und Betreiben des Hybridantriebsstrangsystems 1 verwendet wird. Die Steuereinrichtung 8 ist dazu eingerichtet, das nachfolgend beschriebene erfindungsgemäße Verfahren zum Betreiben des Hybridantriebsstrangsystems 1 durchzuführen.

In Figur 2 ist schematisch ein Ablauf des erfindungsgemäßen Verfahrens dargestellt, wobei die wesentlichen Verfahrensschritte für die Beschaffung der erfahrungsbasierten Ladezustandstrajektorie und für die Ermittlung der angestrebten Ladezustandstrajektorie zusammengefasst sind. In einem Fahrwegermittlungsschritt 14 wird ein erwarteter Fahrwegverlauf ermittelt. Dabei können Informationen entweder direkt von einem aktivierten Navigationsgerät 15 oder von einer Kombination 16 aus Globalpositionssensoren (GPS) und digitalen Landkartensystemen bzw. aus dem aktuellen Fahrzeugort und einem voraussichtlich ausgewählten Fahrweg zusammengeführt werden.

Für den erwarteten Fahrwegverlauf wird in einem Datenbeschaffungsschritt 17 eine erfahrungsbasierte Ladezustandstrajektorie bzw. umfassende Informationen zu der erfahrungsbasierten Ladezustandstrajektorie von der externen Datenbank 12 abgerufen, wobei die erfahrungsbasierte Ladezustandstrajektorie auf Grund von vorgegebenen Auswahlkriterien aus einer Anzahl von erfahrungsbasierten Ladezustandstrajektorien ausgewählt wird, die in der externen Datenbank 12 hinterlegt sind. Die externe Datenbank 12 kann beispielsweise von dem Hersteller des Fahrzeugs zur Verfügung gestellt werden. Die erfahrungsbasierte Ladezustandstrajektorie würde bereits als Grundlage für einen Betrieb des Hybridantriebsstrangsystems verwendet werden können. Sie enthält jedoch noch keine Anpassung an aktuelle Vorgaben wie beispielsweise eine aktuelle Verkehrssituation oder individuelle Vorgaben des Fahrers. Falls der erwartete Fahrwegverlauf durch Eingaben des Fahrers in ein Navigationsgerät 15 ermittelt wurde und der Fahrer den diesbezüglichen Vorschlägen des Navigationsgerätes 15 folgt, bzw. dem vorgeschlagenen und damit erwarteten Fahrwegverlauf folgt, kann die von der externen Datenbank 12 abgerufene erfahrungsbasierte Ladezustandstrajektorie den gesamten Fahrwegverlauf abdecken. Eine Aktualisierung der erfahrungsbasierten Ladezustandstrajektorie ist in diesem Fall während der Fahrt nicht mehr notwendig. Falls der Fahrer von dem erwarteten Fahrwegverlauf abweicht kann ein neuer erwarteter Fahrwegverlauf ermittelt und eine neue erfahrungsbasierte Ladezustandstrajektorie von der externen Datenbank 12 abgerufen werden.

In einem Anpassungsschritt 18 wird ausgehend von der erfahrungsbasierten Ladezustandstrajektorie eine Anpassung an aktuelle Gegebenheiten vorgenommen. Dabei können alle verfügbaren Informationen über eine aktuelle Verkehrssituation entlang des erwarteten Fahrwegverlaufs wie beispielsweise ein erhöhtes Verkehrsaufkommen oder eine Baustelle bzw. eine zwingende Umleitung, oder aber aktuelle Wetterbedingungen etc. berücksichtigt werden. Diese Informationen können auch über eine Kommunikation zwischen dem Fahrzeug mit weiteren Fahrzeugen auf dem erwarteten Fahrwegverlauf oder über eine Kommunikation des Fahrzeugs mit ortsfest installierten Kommunikationseinrichtungen einer Verkehrsinfrastruktur beschafft werden. Zudem können aktuelle Vorgaben des Fahrers wie beispielsweise eine aktuell bevorzugte Fahrweise, beispielsweise möglichst schnell oder energiesparend, oder ein bevorzugtes Optimierungskriterium sein, beispielsweise eine möglichst batterieschonende oder abgasarme Fahrweise. Ausgehend von der erfahrungsbasierten Ladezustandstrajektorie werden dann in dem Anpassungsschritt mindestens eine Optimierungsnebenbedingung vorgegeben, mit welcher die erfahrungsbasierte Ladezustandstrajektorie modifiziert und eine angestrebte Ladezustandstrajektorie ermittelt wird. Diese angestrebte Ladezustandstrajektorie kann dann für die Ansteuerung und den Betrieb des Hybridantriebsstrangsystems 1 verwendet werden.

Der Aufwand für die Ermittlung der angepassten Ladezustandstrajektorie ist vergleichsweise gering, da die erfahrungsbasierte Ladezustandstrajektorie von der externen Datenbank 12 abgerufen wurde und gegebenenfalls zusammen mit weiteren Informationen zur Verfügung steht, ohne dass umfangreiche Berechnungen oder Optimierungen erforderlich sind. Die erfahrungsbasierte Ladezustandstrajektorie kann einen vergleichsweise langen Zeitraum von mehreren Minuten bis hin zu der gesamten Fahrtzeit abdecken. Für die Anpassung an aktuelle Gegebenheiten, bzw. für die in dem Anpassungsschritt 18 erforderliche Ermittlung der angestrebten Ladezustandstrajektorie, die für den Betrieb des Hybridantriebsstrangsystems verwendet wird, ist lediglich ein vergleichsweise geringer Rechenaufwand in dem Fahrzeug erforderlich. Die auf diese Weise ausgehend von der abgerufenen erfahrungsbasierten Ladezustandstrajektorie modifizierte angestrebte Ladezustandstrajektorie wird dann in einem Umsetzungsschritt 19 dazu verwendet, über die Steuereinrichtung 8 den Betrieb des Hybridantriebsstrangsystems 1 zu steuern und zu kontrollieren. Der Anpassungsschritt 18 kann ständig wiederholt und die angestrebte Ladezustandstrajektorie aktualisiert werden. Falls eine Abweichung des tatsächlichen Fahrwegverlaufs von dem erwarteten Fahrwegverlauf festgestellt wird kann und sollte auch in einem erneut durchgeführten Datenbeschaffungsschritt 17 eine neue erfahrungsbasierte Ladezustandstrajektorie von der externen Datenbank 12 abgerufen und anschließend in einem Anpassungsschritt 18 modifiziert und in eine neue angestrebte Ladezustandstrajektorie überführt werden.

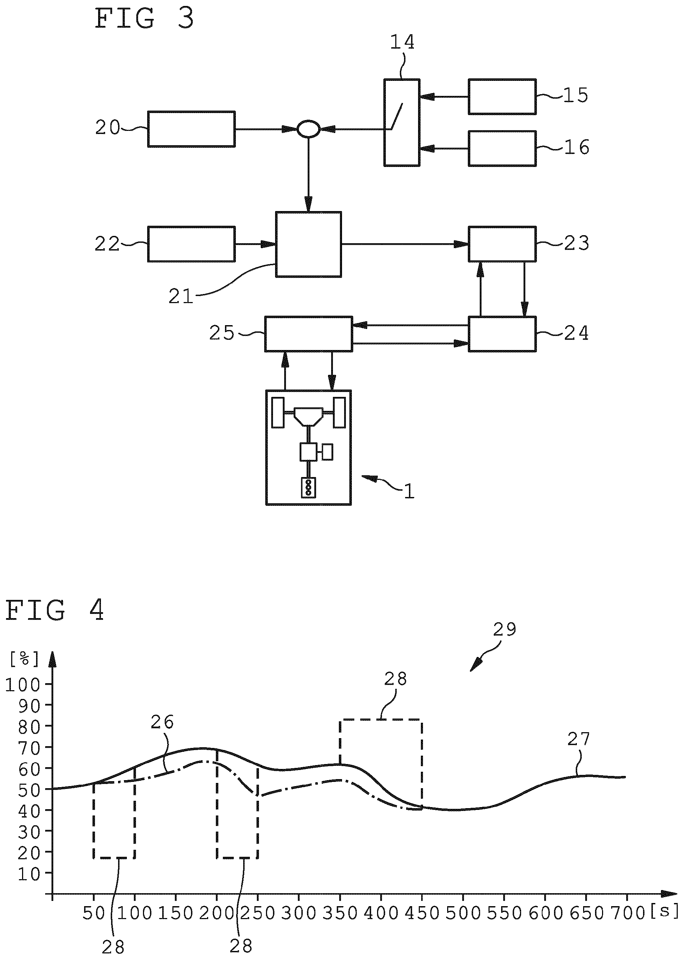

In Figur 3 ist schematisch ein Ablauf des erfindungsgemäßen Verfahrens dargestellt, wobei die angestrebte Ladezustandstrajektorie für ein voraussichtlich eintretendes ungünstiges Betriebsereignis für eine vorgegebene Ereignisdauer mit einer weiteren Optimierungsnebenbedingung angepasst wird. Wie bereits vorangehend beschrieben wird in dem Fahrwegermittlungsschritt 14 für die Dauer eines Vorhersagezeitraums ein erwarteter Fahrwegverlauf ermittelt. Dabei können Informationen entweder direkt von dem aktivierten Navigationsgerät 15 oder von einer Kombination 16 aus Globalpositionssensoren (GPS) und digitalen Landkartensystemen bzw. aus dem aktuellen Fahrzeugort und einem voraussichtlich ausgewählten Fahrweg zusammengeführt werden. Mit Hilfe eines weiteren Moduls 20 wird der Vorhersagezeitraum Δt vorgegeben, der bei einfachen Varianten einer fest vorgegebenen Zeitdauer entspricht, aber bei komplexeren Varianten des erfindungsgemäßen Verfahrens auf der Grundlage der ermittelten Fahrwegsinformationen und weiteren die Fahrsituation beschreibende Kenngrößen wie beispielsweise der Geschwindigkeit des Fahrzeugs ermittelt und vorgegeben werden kann.

Für den erwarteten Fahrwegverlauf wird in den in Figur 3 nicht gesondert dargestellten Datenbeschaffungs- und Anpassungsschritten 17, 18 eine erfahrungsbasierte Ladezustandstrajektorie beschafft und auf deren Grundlage eine angestrebte Ladezustandstrajektorie ermittelt.

Ausgehend von der angestrebten Ladezustandstrajektorie und der für den weiteren Fahrwegverlauf erwarteten Fahrzeugantriebsleistung werden mit Hilfe eines Modells 21 ausgehend von aktuellen Betriebskenngrößen wie beispielsweise der aktuellen Geschwindigkeit und von der erwarteten Fahrwegslast die für die Steuerung des Hybridantriebsstrangsystems 1 erforderlichen Steuergrößen ermittelt.

Ein Fahrer kann jederzeit Eingriffe 22 vornehmen und beispielsweise die Geschwindigkeit des Fahrzeugs erhöhen oder verringern wollen.

Mit einem Überprüfungsmodul 23 wird ausgehend von der erwarteten Fahrwegslast bzw. der erwarteten Fahrzeugantriebsleistung überprüft, ob bzw. mit welcher Wahrscheinlichkeit innerhalb des Vorhersagezeitraums ein ungünstiges Betriebsereignis wie beispielsweise ein Gangwechsel oder eine Steigerung der Geschwindigkeit nach einer längeren Fahrt ohne zugeschalteten Verbrennungsmotor 2 eintreten wird. Falls mit ausreichend hoher Wahrscheinlichkeit mit dem Überprüfungsmodul 23 ein ungünstiges Betriebsereignis identifiziert wird, wird eine Optimierungsnebenbedingung erzeugt und zusammen mit den aus dem Modell 21 ermittelten Steuergrößen an ein Optimierungsmodul 24 weitergeleitet.

In dem Optimierungsmodul 24 wird mit einem geeigneten Optimierungsverfahren eine angestrebte Ladezustandstrajektorie für einen zeitlichen Verlauf des Ladezustands der Energiespeichereinrichtung ermittelt. Das Optimierungsverfahren kann eine multikriterielle skalarisierte Optimierung oder ein anderes Optimierungsverfahren sein, welches für die Steuerung des Betriebs eines Hybridantriebsstrangsystems geeignet ist. Dabei müssen die Optimierungsnebenbedingungen, die gegebenenfalls mit dem Überprüfungsmodul 23 erzeugt wurden, berücksichtigt werden.

Die mit dem Optimierungsverfahren ermittelten bzw. veränderten Steuergrößen werden an ein Steuerungsmodul 25 übergeben, welches die Steuergrößen in Steuerbefehle umsetzt, mit welchen der Betrieb des Hybridantriebsstrangsystems 1 gesteuert wird.

In Figur 4 ist eine schematische Darstellung des Verlaufs des Ladezustands 26, der erfahrungsbasierten Ladezustandstrajektorie 27 und der angestrebten Ladezustandstrajektorie 28 während einer beispielhaften Fahrt entlang eines Fahrwegs gezeigt. Auf der Y-Achse des in Figur 4 gezeigten Ladezustandsdiagramms 29 ist eine Ladung der Energiespeichereinrichtung in Prozent aufgetragen. Auf der X-Achse des Ladezustandsdiagramms 29 ist eine vergangene Zeit seit einem Beginn einer Fahrt entlang eines Fahrwegs in Sekunden aufgetragen. Der Zeitpunkt des Beginns der Fahrt, der im Koordinatenursprung des Ladezustandsdiagramms 29 liegt, wird nachfolgend mit T bezeichnet.

Der Ladezustand 26 entspricht der tatsächlichen Ladung der Energiespeichereinrichtung in Prozent und ist durch eine Strich-Punkt-Linie dargestellt. Die erfahrungsbasierte Ladungstrajektorie 27 wurde vor dem Beginn der Fahrt auf der Grundlage von Betriebsdaten von Hybridantriebsstrangsystemen mehrerer Fahrzeuge ermittelt und von einer externen Datenbank für den erwarteten Fahrwegverlauf abgerufen. Die erfahrungsbasierte Ladungstrajektorie 27 ist durch eine durchgehende Linie dargestellt. Der Vorhersagezeitraum Δt der erfahrungsbasierten Ladungstrajektorie 27 umfasst bei dem in Figur 4 gezeigten Ladezustandsdiagramm 29 700 Sekunden.

Die Steuerungseinrichtung ist in dem dargestellten Beispiel in der Lage Vorhersagen mit einem Vorhersagehorizont von 200 Sekunden zu treffen und die angestrebte Ladezustandstrajektorie 28 zu beeinflussen. Die angestrebte Ladezustandstrajektorie 28 ist durch eine gestrichelte Linie dargestellt.

Bis T + 50 Sekunden verlaufen der Ladezustand 26, die erfahrungsbasierten Ladezustandstrajektorie 27 und die angestrebten Ladezustandstrajektorie 28 deckungsgleich. Bei T + 50 Sekunden ermittelt die Steuereinrichtung, dass eine Absenkung des Ladezustands 26 gegenüber der erfahrungsbasierten Ladezustandstrajektorie 27 erforderlich ist und bestimmt eine angestrebte Ladezustandstrajektorie 28, durch die die ermittelte, notwendige Abweichung erreichbar ist. Im dargestellten Beispiel verläuft die angestrebte Ladezustandstrajektorie 28 dazu von T + 50 Sekunden bis T + 100 Sekunden bei 20%, wodurch der Ladezustand 26 von der erfahrungsbasierten Ladezustandstrajektorie 27 weggeführt wird. Ab T + 100 Sekunden verlaufen die erfahrungsbasierte Ladezustandstrajektorie 27 und die angestrebte Ladezustandstrajektorie 28 wieder deckungsgleich.

Bei T + 200 Sekunden ermittelt die Steuereinrichtung, dass eine weitere Korrektur des Ladezustands 26 gegenüber der erfahrungsbasierten Ladezustandstrajektorie 27 erforderlich ist. Hierzu wird die angestrebte Ladezustandstrajektorie 28 von T + 200 Sekunden bis T + 250 Sekunden erneut auf 20 % abgesenkt. Der Ladezustand 26 des Energiespeichers folgt dieser Anpassung und die Ablage zwischen dem Ladezustand 26 und der erfahrungsbasierten Ladezustandstrajektorie 27 wird zwischen T + 200 Sekunden und T + 250 Sekunden vergrößert.

Bei T + 350 Sekunden ermittelt die Steuereinrichtung, dass die Ablage zwischen dem Ladezustand 26 und der erfahrungsbasierten Ladezustandstrajektorie 27 verringert werden sollte. Hierzu wird die angestrebte Ladezustandstrajektorie 28 von T + 350 Sekunden bis T + 450 Sekunden auf 80 % angehoben. Der Ladezustand 26 folgt dieser Anapassung und die Ablage zwischen dem Ladezustand 26 und der erfahrungsbasierten Ladezustandstrajektorie 27 wird verringert, bis der Ladezustand 26 wieder der erfahrungsbasierten Ladezustandstrajektorie 27 folgt.

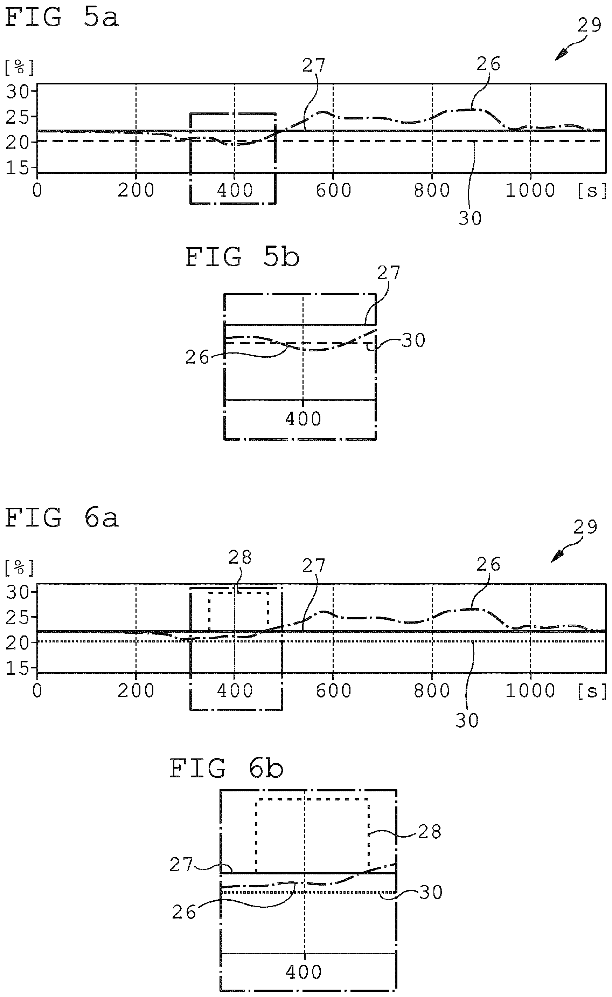

In den Figuren 5a und 5b ist ein Verlauf des Ladezustands 26 entlang eines 1200 Sekunden langen Fahrwegverlaufs dargestellt. Die Figur 5b zeigt eine ausschnittsweise Vergrößerung der Figur 5a im Bereich von T + 400 Sekunden. Die erfahrungsbasierte Ladezustandstrajektorie 27 liegt in dem gezeigten Beispiel konstant bei einem Wert von 22 %, das heißt, dass das Hybridantriebsstrangsystem mit elektrischer Energie aus dem Energiespeichersystem versorgt wird, solange der Ladezustand 26 diesen Wert nicht unterschreitet. Sobald der Ladezustand 26 unter 22% fällt, werden durch die Betriebszeiten des Verbrennungsmotors erhöht, um den Ladezustand 26 zu erhöhen.

In den Figuren 5a und 5b ist darüber hinaus eine Tiefentladelinie 30 eingezeichnet. Diese verläuft bei einem Wert von 19,9 %. Sobald der Ladezustand 26 der Energiespeichereinrichtung unter diesen Wert fällt, befindet sich diese im Zustand der Tiefentladung und läuft Gefahr, beschädigt zu werden. Wie in Figur 5b gut zu erkennen ist, fällt der Ladezustand 26 im Bereich von T + 400 Sekunden unter die Tiefenladelinie 30, wenn für die erfahrungsbasierte Ladezustandstrajektorie 27 ein konstanter Wert von 22 % vorgegeben wird.

In den Figuren 6a und 6b ist ein alternativer Verlauf des Ladezustands 26 entlang des gleichen Fahrwegverlaufs, wie in den Figuren 5a und 5b, gezeigt. Die Steuereinrichtung ist dahingehend programmiert, dass ein Unterschreiten der Tiefentladelinie 30 in jedem Fall verhindert werden soll. Dementsprechend ist die angestrebte Ladezustandstrajektorie 28 im Bereich des bei Nutzung der erfahrungsbasierten Ladezustandstrajektorie 27 voraussichtlich auftretenden Unterschreitens der Tiefentladelinie 30, durch die Steuereinrichtung auf einen Ladezustand von 28% angehoben. Diese Anhebung beginnt früher als T + 400 Sekunden, um das unterschreiten der Tiefentladelinie 30 in jedem Fall verhindern zu können.

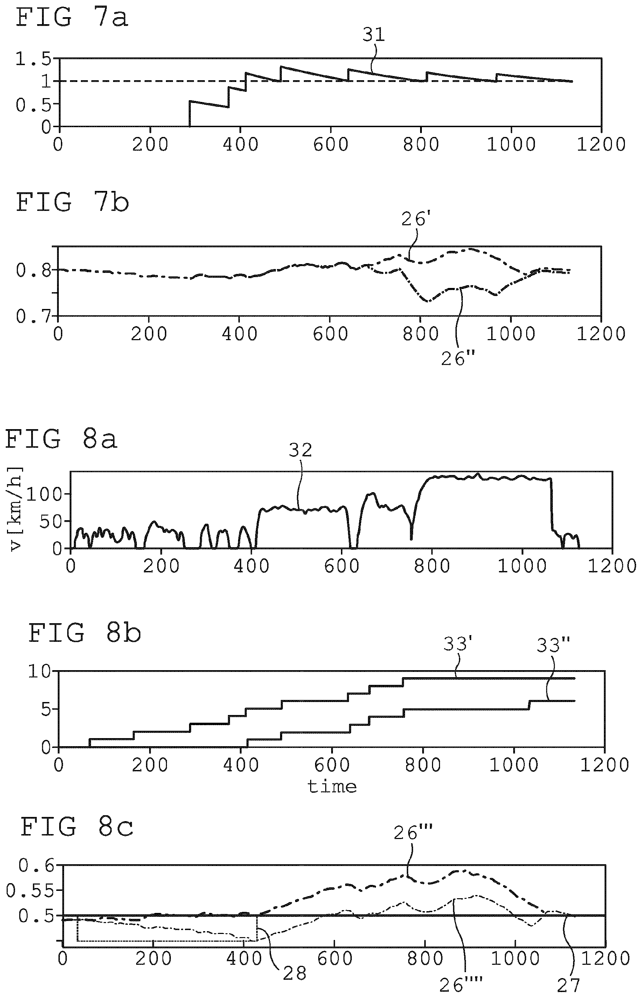

In Figur 7a ist eine schematische Darstellung eines Verlaufs eines erfindungsgemäß vorgesehenen Bewertungsfaktors 31, entlang eines alternativen, 1200 Sekunden langen Fahrwegverlaufs dargestellt. Der Bewertungsfaktor 31 steigt sprunghaft, wenn der Verbrennungsmotor gestartet wird und sinkt mit der Zeit ab. Ein Wert von 1 für den Bewertungsfaktor 31 bedeutet, dass die Anzahl der bisher erfolgten Motorstarts des Verbrennungsmotors durchschnittlich ist. Wenn der Bewertungsfaktor 31 größer ist als 1, dann sind überproportional viele Motorstarts des Verbrennungsmotors erfolgt. Der in Figur 7a dargestellte Verlauf des Bewertungsfaktors 31 entsteht, wenn bei dem erfindungsgemäßen Verfahren der Bewertungsfaktor 31 derart berücksichtigt wird, dass weitere Motorstarts des Verbrennungsmotors solange verhindert werden, wie der Bewertungsfaktor 31 größer ist als 1.

In Figur 7b sind der Verlauf eines ersten Ladezustands 26' und der Verlauf eines zweiten Ladezustands 26'' gezeigt. Der Verlauf des ersten Ladezustand 26' entsteht, wenn das Hybridantriebsstrangsystem ohne Einbeziehung des Bewertungsfaktors 31 betrieben wird. Der Verlauf des zweiten Ladezustands 26'' kommt zustande, wenn der Bewertungsfaktor 31 berücksichtigt wird.

In den Figuren 8a bis 8c ist gezeigt, wie eine Berücksichtigung einer Fahrgeschwindigkeit 32 im Rahmen des erfindungsgemäßen Verfahrens eine Anzahl an Motorstarts 33 und den Ladezustand 26 beeinflusst. In Figur 8a ist die Fahrgeschwindigkeit 32 entlang eines weiteren alternativen, 1200 Sekunden langen Fahrwegverlaufs dargestellt. Bis etwa zum Zeitpunkt T + 400 Sekunden liegt die Fahrgeschwindigkeit 32 unter 50 km/h. Die Steuereinrichtung ist dahingehend programmiert, dass bei einer Fahrgeschwindigkeit 32 von weniger als 50 km/h ein Betrieb des Verbrennungsmotors bevorzugt vermieden werden soll, da ein derartiges Geschwindigkeitsprofil auf eine Stadtfahrt schließen lässt, bei welcher lokale Emissionen nach Möglichkeit verhindert werden sollen.

In Figur 8b sind ein erster Verlauf der kumulierten Anzahl an Motorstarts 33' und ein zweiter Verlauf der kumulierten Anzahl an Motorstarts 33'' gezeigt. Der erste Verlauf der kumulierten Anzahl an Motorstarts 33' entsteht, wenn das zuvor beschriebenen Optimierungskriterium, nämlich dass bei einer Fahrgeschwindigkeit 32 von weniger als 50 km/h der Verbrennungsmotor nach Möglichkeit nicht betrieben werden soll, nicht berücksichtigt wird. Hieraus resultieren im Bereich der vermuteten Stadtfahrt, also bis zum Zeitpunkt T + ca. 400 Sekunden, bereits 4 Motorstarts 33'.

Demgegenüber entsteht der zweite Verlauf der kumulierten Anzahl an Motorstarts 33'', wenn das zuvor beschriebenen Optimierungskriterium im Rahmen des erfindungsgemäßen Verfahrens berücksichtigt wird. Im Ergebnis erfolgen im Bereich der vermuteten Stadtfahrt, durch Anwendung des Erfindungsgemäßen Verfahrens, keine Motorstarts 33''. In Figur 8c ist gezeigt, dass die Optimierungsnebenbedingung, die zur Berücksichtigung des Optimierungskriteriums angepasst wird, die angestrebte Ladezustandstrajektorie 28 ist. In der Figur sind weiterhin zwei Verläufe des Ladezustands gezeigt, nämlich ein dritter Verlauf des Ladezustand 26‴ und ein vierter Verlauf des Ladezustands 26‴′.

Die erfahrungsbasierte Ladezustandstrajektorie 27 ist in dem gezeigten Beispiel konstant bei einem Wert von 50 %, das heißt, dass das Hybridantriebsstrangsystem mit elektrischer Energie aus dem Energiespeichersystem versorgt wird, solange der Ladezustand 26 diesen Wert nicht unterschreitet. Um Motorstarts 33 des Verbrennungsmotors zu verhindern, senkt die Steuereinrichtung im Bereich der vermuteten Stadtfahrt die angestrebte Ladezustandstrajektorie 28 auf 45 % ab. Daraus resultiert der vierte Verlauf des Ladezustands 26′‴. Nach dem Ende der vermuteten Stadtfahrt, also ab T + ca. 400 Sekunden, erhöht die Steuereinrichtung die angestrebte Ladezustandstrajektorie 25 wieder auf 50%, sodass das Energiespeichersystem bis zum Ende des Fahrwegverlaufs auf einen Ladezustand von 50 % geladen wird.

### BEZUGSZEICHENLISTE

- 1.: Hybridantriebsstrangsystem
- 2.: Verbrennungsmotor
- 3.: Drehmomentmaschine
- 4.: Hybridgetriebe
- 5.: Abtriebselement
- 6.: Antriebsräder
- 7.: Energiespeichereinrichtung
- 8.: Steuereinrichtung
- 9.: Sensor
- 10.: Datenübertragungseinrichtung
- 11.: Datenverarbeitungseinrichtung
- 12.: externe Datenbank
- 13.: interne Datenbank
- 14.: Fahrwegermittlungsschritt
- 15.: Navigationsgerät
- 16.: Kombination
- 17.: Datenbeschaffungsschritt
- 18.: Anpassungsschritt
- 19.: Umsetzungsschritt
- 20.: Modul
- 21.: Modell
- 22.: Eingriff
- 23.: Überprüfungsmodul
- 24.: Optimierungsmodul
- 25.: Steuerungsmodul
- 26.: Ladezustand
- 27.: erfahrungsbasierte Ladezustandstrajektorie
- 28.: angestrebte Ladezustandstrajektorie
- 29.: Ladezustandsdiagramm
- 30.: Tiefentladelinie
- 31.: Bewertungsfaktor
- 32.: Fahrgeschwindigkeit
- 33.: Motorstart

## Patentansprüche

1. Verfahren zum Betreiben eines Fahrzeugs mit einem Hybridantriebsstrangsystem (1), wobei das Hybridantriebsstrangsystem (1) einen Verbrennungsmotor (2) und eine elektrisch betriebene Drehmomentmaschine (3) aufweist, die energieübertragend mit einer Energiespeichereinrichtung (7) verbunden ist, und wobei der Verbrennungsmotor (2) und die Drehmomentmaschine (3) von einer Steuereinrichtung (8) gesteuert und über ein Hybridgetriebe (4) mit einem Abtriebselement (5) verbunden sind, wobei das Verfahren umfasst, dass für einen Vorhersagezeitraum Δt ausgehend von einem erwarteten Fahrwegverlauf eine angestrebte Ladezustandstrajektorie (28) für einen zeitlichen Verlauf eines Ladezustands (26) der Energiespeichereinrichtung (7) ermittelt wird, und dass der Betrieb des Hybridantriebsstrangsystems (1) bei Berücksichtigung der abgeschätzten erwarteten Fahrzeugantriebsleistung unter Verwendung eines Optimierungsverfahrens im Hinblick auf die angestrebte Ladezustandstrajektorie (28) optimiert und von der Steuereinrichtung (8) gesteuert wird, wobei das Verfahren weiterhin umfasst, dass vor Beginn des Vorhersagezeitraums Δt von einer externen Datenbank (12) für den erwarteten Fahrwegverlauf eine erfahrungsbasierte Ladezustandstrajektorie (27) abgerufen wird, die mindestens den Vorhersagezeitraum Δt abdeckt, dass unter Berücksichtigung einer erwarteten Fahrwegslast eine erwartete Fahrzeugantriebsleistung abgeschätzt wird, dass für vorab festgelegte ungünstige Betriebsereignisse jeweils mindestens eine Optimierungsnebenbedingung vorgegeben wird, dass für jede Optimierungsnebenbedingung eine zugeordnete Ereignisreaktionsdauer t_{ER} vorgegeben ist, dass ausgehend von der abgeschätzten erwarteten Fahrzeugantriebsleistung abgeschätzt wird, ob innerhalb eines Ereignisvorhersagezeitraums ein ungünstiges Betriebsereignis eintreten wird, dass im Falle eines voraussichtlich eintretenden ungünstigen Betriebsereignisses über die zugeordnete zeitlich begrenzte Ereignisreaktionsdauer t_{ER} hinweg mindestens eine diesem ungünstigen Betriebsereignis zugeordnete Optimierungsnebenbedingung für die Steuerung des Betriebs des Hybridantriebstrangsystems (1) vorgegeben wird, und dass die angestrebte Ladezustandstrajektorie (28) ausgehend von der erfahrungsbasierten Ladezustandstrajektorie (27) durch Modifikation mit der mindestens einen vorgegebenen Optimierungsnebenbedingung ermittelt wird.

2. Verfahren nach Anspruch 1, **dadurch gekennzeichnet, dass** die erfahrungsbasierte Ladezustandstrajektorie (27) auf der Grundlage von Betriebsdaten von Hybridantriebsstrangsystemen mehrerer Fahrzeuge ermittelt wurde.

3. Verfahren nach Anspruch 1 oder 2, **dadurch gekennzeichnet, dass** die von der externen Datenbank (12) abgerufene erfahrungsbasierte Ladezustandstrajektorie (27) aus einer Anzahl von in der externen Datenbank (12) hinterlegten Ladezustandstrajektorien ausgewählt wird, wobei für die Auswahl mindestens eine Fahrzeugkenngröße des Hybridantriebsstrangsystems (1) als Auswahlkriterium verwendet wird.

4. Verfahren nach einem der vorausgehenden Ansprüche, **dadurch gekennzeichnet, dass** die von der externen Datenbank (12) abgerufene erfahrungsbasierte Ladezustandstrajektorie (27) aus einer Anzahl von in der externen Datenbank (12) hinterlegten Ladezustandstrajektorien ausgewählt wird, wobei für die Auswahl mindestens eine Fahrtenkenngröße als Auswahlkriterium verwendet wird, die ausgehend von mindestens einer Betriebskenngröße des Fahrzeugs ermittelt wurde, die während mindestens einer zurückliegenden Fahrt mit dem Fahrzeug ermittelt wurde.

5. Verfahren nach einem der vorausgehenden Ansprüche, **dadurch gekennzeichnet, dass** mindestens eine Optimierungsnebenbedingung vor Beginn des Vorhersagezeitraums Δt von einem Fahrer vorgegeben wird.

6. Verfahren nach einem der vorausgehenden Ansprüche, **dadurch gekennzeichnet, dass** mindestens ein vorab festgelegtes ungünstiges Betriebsereignis eine erhöhte Schadstoffemission bewirken würde, und dass mit einer dem ungünstigen Betriebsereignis zugeordneten Optimierungsnebenbedingung eine demgegenüber reduzierte Schadstoffemission bewirkt wird.

7. Verfahren nach einem der vorausgehenden Ansprüche, **dadurch gekennzeichnet, dass** mindestens ein vorab festgelegtes ungünstiges Betriebsereignis eine ungünstige Temperaturentwicklung innerhalb des Hybridantriebsstrangsystems (1) oder einen ungünstigen Zustand der Energiespeichereinrichtung (7) bewirken würde, und dass mit einer dem ungünstigen Betriebsereignis zugeordneten Optimierungsnebenbedingung eine demgegenüber günstigere Entwicklung der Temperatur oder des Zustands der Energiespeichereinrichtung (7) bewirkt wird.

8. Verfahren nach einem der vorausgehenden Ansprüche, **dadurch gekennzeichnet, dass** anhand einer vorgegebenen Priorisierung eine der diesen ungünstigen Betriebsereignissen zugeordneten Optimierungsnebenbedingungen ausgewählt und für die Steuerung des Betriebs des Hybridantriebsstrangsystems (1) vorgegeben wird, falls dem ermittelten ungünstigen Betriebsereignis mehr als eine Optimierungsnebenbedingung zugeordnet ist.

9. Verfahren nach einem der vorausgehenden Ansprüche, **dadurch gekennzeichnet, dass** anhand einer vorgegebenen Priorisierung eine zugeordnete Optimierungsnebenbedingungen ausgewählt und für die Steuerung des Betriebs des Hybridantriebsstrangsystems (1) vorgegeben wird, falls mehr als ein ungünstiges Betriebsereignis innerhalb des Ereignisvorhersagezeitraums ermittelt wird.

10. Verfahren nach einem der vorausgehenden Ansprüche, **dadurch gekennzeichnet, dass** während des Betriebs des Hybridantriebsstrangsystems (1) Betriebskenngrößen erfasst werden, und dass ausgehend von den erfassten Betriebskenngrößen eine Priorisierung der zugeordneten Optimierungsnebenbedingungen überprüft und gegebenenfalls geändert wird.

11. Verfahren nach einem der vorausgehenden Ansprüche, **dadurch gekennzeichnet, dass** im Falle eines voraussichtlich eintretenden ungünstigen Betriebsereignisses während einer vorgegebenen maximalen Reaktionsdauer Optimierungskenngrößen erfasst werden, und dass die Ereignisreaktionsdauer t_{ER} beendet wird, sobald die erfassten Optimierungskenngrößen ein vorgegebenes Ereignisreaktionsbeendigungskriterium erfüllen.

12. Hybridantriebsstrangsystem (1) für ein Fahrzeug, wobei das Hybridantriebsstrangsystem (1) eine Steuereinrichtung (8), einen nicht elektrisch betriebenen Antriebsmotor (2) und eine elektrisch betriebene Drehmomentmaschine (3) aufweist, die energieübertragend mit einer Energiespeichereinrichtung (7) verbunden ist, und wobei der Antriebsmotor (2) und die Drehmomentmaschine (3) von der Steuereinrichtung (8) gesteuert und über ein Hybridgetriebe (4) mit einem Abtriebselement (5) verbunden sind, **dadurch gekennzeichnet, dass** die Steuereinrichtung (8) derart eingerichtet ist, dass bei einem Betrieb des Hybridantriebsstrangsystems (1) ein in den Ansprüchen 1 bis 11 definiertes Verfahren durchgeführt wird.

## Claims

1. Method for operating a vehicle having a hybrid powertrain system (1), wherein the hybrid powertrain system (1) comprises an internal combustion engine (2) and an electrically operated torque machine (3) that is connected, in an energy-transferring manner, to an energy storage device (7), and wherein the internal combustion engine (2) and the torque machine (3) are controlled by a control unit (8) and are connected via a hybrid transmission (4) to an output element (5), wherein the method comprises determining, for a prediction period Δt, starting from an expected route profile, a target state-of-charge trajectory (28) for a temporal progression of a state of charge (26) of the energy storage device (7), and optimizing and controlling, by the control unit (8), the operation of the hybrid powertrain system (1), while taking into account the estimated expected vehicle drive power, by using an optimization method with respect to the target state-of-charge trajectory (28), wherein the method further comprises retrieving, before the start of the prediction period Δt, from an external database (12), for the expected route profile, an experience-based state-of-charge trajectory (27) that covers at least the prediction period Δt, estimating an expected vehicle drive power while taking into account an expected route load, specifying, for each of predefined adverse operating events, at least one optimization constraint, specifying, for each optimization constraint, an associated event reaction duration t_{ER}, estimating, starting from the estimated expected vehicle drive power, whether an adverse operating event will occur within an event prediction period, specifying, in the case of an adverse operating event that is expected to occur, for the associated time-limited event reaction duration t_{ER}, at least one optimization constraint associated with this adverse operating event for controlling the operation of the hybrid powertrain system (1), and determining the target state-of-charge trajectory (28), starting from the experience-based state-of-charge trajectory (27), by modification with the at least one specified optimization constraint.

2. Method according to claim 1, **characterized in that** the experience-based state-of-charge trajectory (27) was determined on the basis of operating data of hybrid powertrain systems of a plurality of vehicles.

3. Method according to claim 1 or 2, **characterized in that** the experience-based state-of-charge trajectory (27) retrieved from the external database (12) is selected from a number of state-of-charge trajectories stored in the external database (12), wherein, for the selection, at least one vehicle characteristic variable of the hybrid powertrain system (1) is used as a selection criterion.

4. Method according to one of the preceding claims, **characterized in that** the experience-based state-of-charge trajectory (27) retrieved from the external database (12) is selected from a number of state-of-charge trajectories stored in the external database (12), wherein, for the selection, at least one trip characteristic variable is used as a selection criterion, which was determined starting from at least one operating characteristic variable of the vehicle that was determined during at least one previous trip with the vehicle.

5. Method according to one of the preceding claims, **characterized in that** at least one optimization constraint is specified by a driver before the start of the prediction period Δt.

6. Method according to one of the preceding claims, **characterized in that** at least one predefined adverse operating event would cause increased pollutant emissions, and that, with an optimization constraint assigned to the adverse operating event, pollutant emissions reduced relative thereto are brought about.

7. Method according to one of the preceding claims, **characterized in that** at least one predefined adverse operating event would cause an adverse temperature development within the hybrid powertrain system (1) or an adverse condition of the energy storage device (7), and that, with an optimization constraint assigned to the adverse operating event, a development of the temperature or of the condition of the energy storage device (7) that is more favorable relative thereto is brought about.

8. Method according to one of the preceding claims, **characterized in that**, on the basis of a specified prioritization, one of the optimization constraints assigned to these adverse operating events is selected and specified for controlling the operation of the hybrid powertrain system (1) if more than one optimization constraint is assigned to the determined adverse operating event.

9. Method according to one of the preceding claims, **characterized in that**, on the basis of a specified prioritization, an associated optimization constraint is selected and specified for controlling the operation of the hybrid powertrain system (1) if more than one adverse operating event is determined within the event prediction period.

10. Method according to one of the preceding claims, **characterized in that**, during operation of the hybrid powertrain system (1), operating characteristic variables are recorded, and that, starting from the recorded operating characteristic variables, a prioritization of the associated optimization constraints is checked and, if applicable, changed.

11. Method according to one of the preceding claims, **characterized in that**, in the case of an adverse operating event that is expected to occur, optimization characteristic variables are recorded during a specified maximum reaction duration, and that the event reaction duration t_{ER} is ended as soon as the recorded optimization characteristic variables meet a specified event reaction termination criterion.

12. Hybrid powertrain system (1) for a vehicle, wherein the hybrid powertrain system (1) comprises a control unit (8), a non-electrically operated drive engine (2), and an electrically operated torque machine (3) that is connected, in an energy-transferring manner, to an energy storage device (7), and wherein the drive engine (2) and the torque machine (3) are controlled by the control unit (8) and are connected via a hybrid transmission (4) to an output element (5), **characterized in that** the control unit (8) is configured in such a way that, during operation of the hybrid powertrain system (1), a method as defined in claims 1 to 11 is carried out.

## Revendications

1. Procédé de fonctionnement d'un véhicule doté d'un système de groupe motopropulseur hybride (1), le système de groupe motopropulseur hybride (1) comprenant un moteur à combustion interne (2) et une machine de couple à commande électrique (3) qui est reliée, de manière à transférer de l'énergie, à un dispositif de stockage d'énergie (7), et le moteur à combustion interne (2) et la machine de couple (3) étant commandés par une unité de commande (8) et étant reliés, via une transmission hybride (4), à un élément de sortie (5), le procédé comprenant la détermination, pour une période de prédiction Δt, à partir d'un profil de trajet attendu, d'une trajectoire cible d'état de charge (28) pour une évolution temporelle d'un état de charge (26) du dispositif de stockage d'énergie (7), et l'optimisation et la commande, par l'unité de commande (8), du fonctionnement du système de groupe motopropulseur hybride (1), en tenant compte de la puissance d'entraînement du véhicule attendue estimée, au moyen d'une méthode d'optimisation au regard de la trajectoire cible d'état de charge (28), le procédé comprenant en outre la récupération, avant le début de la période de prédiction Δt, à partir d'une base de données externe (12), pour le profil de trajet attendu, d'une trajectoire d'état de charge basée sur l'expérience (27) qui couvre au moins la période de prédiction Δt, l'estimation d'une puissance d'entraînement du véhicule attendue en tenant compte d'une charge de trajet attendue, la définition, pour chacun des événements de fonctionnement défavorables prédéfinis, d'au moins une contrainte d'optimisation, la définition, pour chaque contrainte d'optimisation, d'une durée de réaction à l'événement associée t_{ER}, l'estimation, à partir de la puissance d'entraînement du véhicule attendue estimée, de la survenue ou non d'un événement de fonctionnement défavorable au sein d'une période de prévision d'événement, la définition, dans le cas d'un événement de fonctionnement défavorable dont la survenue est attendue, pour la durée de réaction à l'événement limitée dans le temps associée t_{ER}, d'au moins une contrainte d'optimisation associée à cet événement de fonctionnement défavorable pour commander le fonctionnement du système de groupe motopropulseur hybride (1), et la détermination de la trajectoire cible d'état de charge (28), à partir de la trajectoire d'état de charge basée sur l'expérience (27), par modification au moyen de l'au moins une contrainte d'optimisation définie.

2. Procédé selon la revendication 1, **caractérisé en ce que** la trajectoire d'état de charge basée sur l'expérience (27) a été déterminée sur la base de données de fonctionnement de systèmes de groupe motopropulseur hybrides d'une pluralité de véhicules.

3. Procédé selon la revendication 1 ou 2, **caractérisé en ce que** la trajectoire d'état de charge basée sur l'expérience (27) récupérée à partir de la base de données externe (12) est sélectionnée parmi un nombre de trajectoires d'état de charge stockées dans la base de données externe (12), une variable caractéristique de véhicule du système de groupe motopropulseur hybride (1) étant utilisée comme critère de sélection pour la sélection.

4. Procédé selon l'une des revendications précédentes, **caractérisé en ce que** la trajectoire d'état de charge basée sur l'expérience (27) récupérée à partir de la base de données externe (12) est sélectionnée parmi un nombre de trajectoires d'état de charge stockées dans la base de données externe (12), une variable caractéristique de trajet étant utilisée comme critère de sélection pour la sélection, laquelle a été déterminée à partir d'au moins une variable caractéristique de fonctionnement du véhicule qui a été déterminée pendant au moins un trajet précédent avec le véhicule.

5. Procédé selon l'une des revendications précédentes, **caractérisé en ce qu'**au moins une contrainte d'optimisation est définie par un conducteur avant le début de la période de prédiction Δt.

6. Procédé selon l'une des revendications précédentes, **caractérisé en ce qu'**au moins un événement de fonctionnement défavorable prédéfini provoquerait une augmentation des émissions polluantes, et qu'au moyen d'une contrainte d'optimisation assignée à l'événement de fonctionnement défavorable, des émissions polluantes réduites par rapport à celles-ci sont obtenues.

7. Procédé selon l'une des revendications précédentes, **caractérisé en ce qu'**au moins un événement de fonctionnement défavorable prédéfini provoquerait une évolution de température défavorable au sein du système de groupe motopropulseur hybride (1) ou un état défavorable du dispositif de stockage d'énergie (7), et qu'au moyen d'une contrainte d'optimisation assignée à l'événement de fonctionnement défavorable, une évolution de la température ou de l'état du dispositif de stockage d'énergie (7) plus favorable par rapport à celle-ci est obtenue.

8. Procédé selon l'une des revendications précédentes, **caractérisé en ce que**, sur la base d'une priorisation définie, l'une des contraintes d'optimisation assignées à ces événements de fonctionnement défavorables est sélectionnée et définie pour commander le fonctionnement du système de groupe motopropulseur hybride (1) si plus d'une contrainte d'optimisation est assignée à l'événement de fonctionnement défavorable déterminé.

9. Procédé selon l'une des revendications précédentes, **caractérisé en ce que**, sur la base d'une priorisation définie, une contrainte d'optimisation associée est sélectionnée et définie pour commander le fonctionnement du système de groupe motopropulseur hybride (1) si plus d'un événement de fonctionnement défavorable est déterminé au sein de la période de prévision d'événement.

10. Procédé selon l'une des revendications précédentes, **caractérisé en ce que**, pendant le fonctionnement du système de groupe motopropulseur hybride (1), des variables caractéristiques de fonctionnement sont enregistrées, et qu'à partir des variables caractéristiques de fonctionnement enregistrées, une priorisation des contraintes d'optimisation associées est vérifiée et, le cas échéant, modifiée.

11. Procédé selon l'une des revendications précédentes, **caractérisé en ce que**, dans le cas d'un événement de fonctionnement défavorable dont la survenue est attendue, des variables caractéristiques d'optimisation sont enregistrées pendant une durée de réaction maximale définie, et que la durée de réaction à l'événement tER est terminée dès que les variables caractéristiques d'optimisation enregistrées satisfont à un critère de fin de réaction à l'événement défini.

12. Système de groupe motopropulseur hybride (1) pour un véhicule, le système de groupe motopropulseur hybride (1) comprenant une unité de commande (8), un moteur d'entraînement non actionné électriquement (2) et une machine de couple à commande électrique (3) qui est reliée, de manière à transférer de l'énergie, à un dispositif de stockage d'énergie (7), et le moteur d'entraînement (2) et la machine de couple (3) étant commandés par l'unité de commande (8) et étant reliés, via une transmission hybride (4), à un élément de sortie (5), **caractérisé en ce que** l'unité de commande (8) est configurée de telle sorte que, pendant le fonctionnement du système de groupe motopropulseur hybride (1), un procédé tel que défini dans les revendications 1 à 11 est execute.
